# EUROPEAN PATENT SPECIFICATION

(11) **EP 2 650 809 B1**
(45) Date of publication and mention of the grant of the patent: **02.11.2016**
(21) Application number: 11847025.1
(22) Date of filing: 29.11.2011
(51) Int. Cl.: G06F 21/52, G06F 21/56

(54) **INFORMATION PROCESSING DEVICE AND INFORMATION PROCESSING METHOD**
INFORMATIONSVERARBEITUNGSVORRICHTUNG UND INFORMATIONSVERARBEITUNGSVERFAHREN
DISPOSITIF ET PROCÉDÉ DE TRAITEMENT D'INFORMATIONS

(30) Priority: 08.12.2010 JP 2010274112
(43) Date of publication of application: 16.10.2013
(73) Proprietor: Panasonic Intellectual Property Management Co., Ltd., Osaka 540-6207 (JP)
(72) Inventor: MAEDA, Manabu, Osaka-shi, Osaka 540-6207 (JP); MATSUSHIMA, Hideki, Osaka-shi, Osaka 540-6207 (JP); HAGA, Tomoyuki, Osaka-shi, Osaka 540-6207 (JP)
(74) Representative: Vigand, Philippe
(86) International application number: PCT/JP2011/006668
(87) International publication number: WO 2012/077300

(56) References cited:
- WO-A1-2009/015671
- JP-A- 2004 126 854
- JP-A- 2009 199 529
- JP-A- 2010 097 594
- US-A1- 2006 064 593
- OKA M ET AL: "Intrusion Detection System Based on Binary Code and Execution Stack Analysis", NIPPON SOFUTOWEA KAGAKKAI TAIKAI RONBUNSHU, XX, JP, 1 January 2003 (2003-01-01), pages 1-4, XP003018566, ISSN: 0913-5391

## Description

### [Technical Field]

The present invention relates to a technique for preventing leakage of information due to content having a malicious program attached thereto.

### [Background Art]

In recent years, apparatuses are becoming widespread which load and store therein image data taken by a digital camera or the like, from the digital camera or a recording medium, and display the stored image data in response to a request from a user. Moreover, besides the image data taken by owners of the apparatuses, such apparatuses load and store image data taken by those other than the owners or image data that is stored in other apparatuses such as a PC (Personal Computer).

An attack to such the apparatuses is conceivable that causes the apparatuses to load malicious image data having a malicious program attached thereto to leak other image data in the apparatuses. For example, an attacker sends malicious image data having the malicious program attached thereto to a PC of a target person, using mail or the like, to cause such apparatus as described above to load the image data. Alternatively, an attacker records image data containing malicious image data having the malicious program attached thereto in a recording medium such as CD-R (Compact Disc Recordable) or DVD-R (Digital Versatile Disk Recordable). The attacker may give the target person the image data recorded in the recording medium to cause an apparatus used by the target to load the malicious image data having the malicious program attached thereto. Examples of attacks with the use of malicious image data having the malicious program attached thereto include an attack scheme exploiting buffer overflow vulnerability.

Here, the attack scheme exploiting the buffer overflow vulnerability will be described.

First, an application (hereinafter, the application refers to a processing unit which is a program executed by a computer and for performing certain processes) stores data for use during execution of the application in a stack area reserved on a RAM (Random Access Memory). In the stack area, a stack frame is created for every function (which means a modulated processing unit which is a portion of the application) in the application. The stack frame has LIFO (Last In First Out) or FILO (First In Last Out) structure and is stored in the stack area.

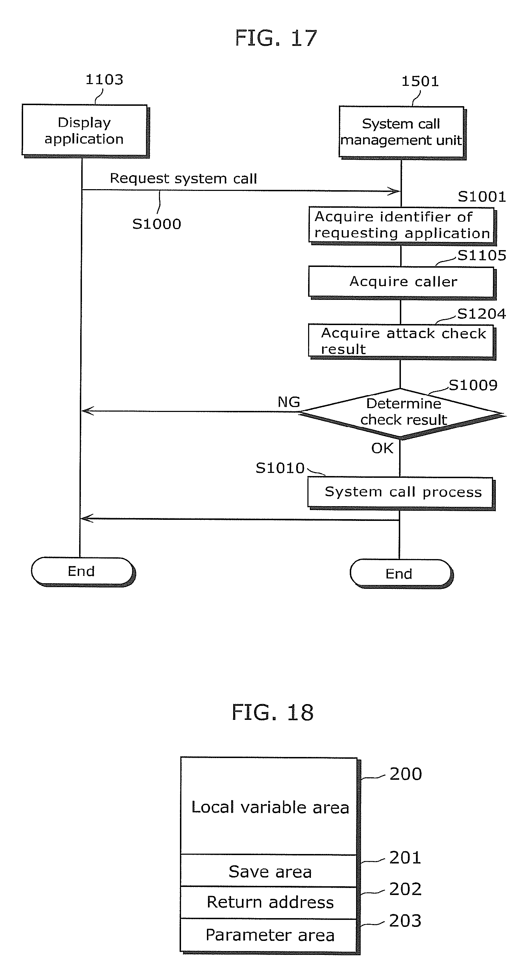

As shown in FIG. 18, the stack frame includes a local variable area 200, a save area 201, a return address 202, and a parameter area 203. In the local variable area 200, local variables for use in functions are stored. In the save area 201, a state of CPU when a function is called is saved (namely, recorded), and the recorded state of the CPU is read out from the save area at the end of the function to return the CPU to a state before the state of CPU is saved. In the return address 202, a return address (namely, an address in the RAM), to which processing defined in the function returns at the end of the processing, is stored. In the parameter area 203, parameters for use when calling the functions are stored.

The buffer overflow vulnerability causes problems when saving data which is inputted from outside into a buffer (variable) reserved in the local variable area 200 on the stack. Specifically, the buffer overflow vulnerability is vulnerability which undesirably allows the save area 201, the return address 202, and the parameter area 203 to be overwritten as a result of input of data larger than a buffer size in the buffer.

At the occurrence of the buffer overflow, for example, due to the image data being devised by the attacker, the local variable area 200 can be overwritten by the malicious program and the return address 202 can be overwritten with a starting address of the malicious program. This allows execution of the malicious program, attached to the image data, on the computer encountering the buffer overflow. That is, the buffer overflow attack is carried out under the following conditions: (1) a particular function in the application has the buffer overflow vulnerability and (2) the function reads malicious image data incorporating the malicious program.

An example of a conventional countermeasure against the buffer overflow attack is a scheme of determining, when calling such program code as a system call process for kernel, whether the call is from the malicious program, based on attribute information (area information) of an address indicated by the return address (for example, see PTLs 1 and 2). FIG. 19 shows a conventional countermeasure against the buffer overflow attack described in PTL 1.

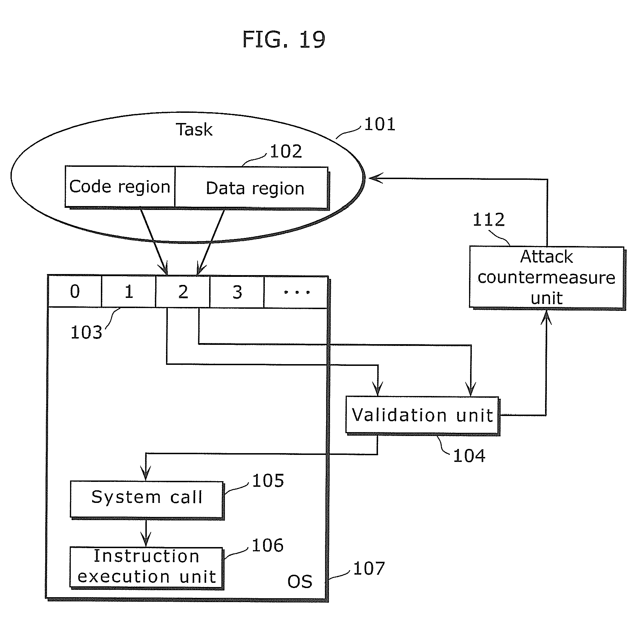

In FIG. 19, a task 101 inputs to an OS (Operating System) 107 a system call request involving reading data from a data region 102. When received the system call request at a system call table 103, the OS 107 requests a validation unit 104 to verify correctness of the system call request. The validation unit 104 determines the correctness of the system call request and outputs the determination result. If the validation unit 104 determines that the system call request is of malicious intent, the system call request is rejected and an attack countermeasure unit 112 is notified. The attack countermeasure unit 112 takes action on the task 101 from which the system call is requested. On the other hand, if the validation unit 104 determines that the system call request is valid, the OS 107 causes an instruction execution unit 106 to execute a system call 105.

### [Citation List]

### [Patent Literature]

Non patent-litterature "Intrusion Detection System Based on Binary code and Execution Stack Analysis", by Oka Mizuki et Al., discloses an intrusion detection system that builds a model of system call sequences in a program by static analysis of its binary code. In order to minimize runtime overhead associated with controlling the conformity of a given run-time transition path with the model, the system saves the search history of transition paths so as to abbreviate the search for transition paths that were already traversed.

International Patent Application WO2009/015671 discloses a method of determining vulnerabilities of a code portion, which is based on a step of querying a database which holds associations of vulnerabilities with code portion identifiers, whereby a vulnerability is determined to be a vulnerability of the code portion when the database holds an association of the vulnerability with the code portion identifier of the code portion. Advantageously, the method comprises a secure history determination step providing a secure history determination result indicating whether or not a parameter set used to call the code portion was used before the publication of the oldest vulnerability of the code portion wherein the step of evaluation is based on the secure history determination result.
[PTL 1] Japanese Unexamined Patent Application Publication No. 2004-126854
[PTL 2] Japanese Unexamined Patent Application Publication No. 2009-199529

### [Summary of Invention]

### [Technical Problem]

Some conventional configuration carries out verification of the correctness on all system call requests, and thus has a problem that responsiveness of processing to the system call request is worsen.

Thus, an object of the present invention is to provide an information processing device which solves the conventional problems and improves the responsiveness of system call processes without compromising safety.

### [Solution to Problem]

The solution according to the invention is defined by independent device claim 1, independent method claim 10, independent program claim 11 and independent computer-readable recording medium claim 12. Embodiments of the invention are defined by dependent claims 2-9 and 13.

An information processing device according to one aspect of the present invention is an information processing device for executing one or more programs each having an application identifier which is a unique identifier, the information processing device including: an application identification unit configured to identify a program being executed in the information processing device, by acquiring the application identifier; a caller identification unit configured to identify a caller indicating a portion of the program from which a program code is called when the identified program calls the program code; a checked-application management unit configured to manage a check result which is information including a result of previous check for safety of executing the identified program; and an attack check determination unit configured to determine, based on the identified caller and the check result, whether a check if the identified program is under attack is to be made.

In general, when calling a program code (that is, system call) the safety of which is already confirmed, it is waste of the computer resources to check again the safety, impairing the responsiveness of the system call process. The program code, however, changes its risk, depending on the call path. Thus, while the program code is previously checked about the safety and confirmed to be safe, it cannot be said that the program code is safe if the caller is different. Thus, it is necessary to determine the safety of the program code in combination with the caller.

According to the above configuration, the caller identification unit can identify the caller of the program code. Thus, the attack check determination unit can determine whether there is need to check if the program code is under attack in combination with the identified caller. As a result, it is possible to provide an information processing device which improves the responsiveness of the system call process, without compromising safety.

Specifically, the information processing device further includes an attack check unit configured to check if the identified program is under attack, wherein when the attack check determination unit determines that an attack check is to be performed on the identified program, the attack check unit may be configured to check if the identified program is under attack.

More specifically, the caller identification unit may be configured to identify the caller, using a return address which is an address in a memory and indicates a return destination used to return an execution process to the identified program after the program code is called from the identified program.

According to the above configuration, the information processing device can specifically identify, from the return address, the caller of the program code.

Furthermore, the caller identification unit may be configured to identify the caller, using the return address and a stack pointer value of a call stack which is used by the identified program when the program code is called from the identified program.

Two pieces of information: the return address and the stack pointer of the call stack at which the program code is called allow uniquely determining the caller of the program code. Thus, the caller identification unit can identify the caller by acquiring the information.

Furthermore, the checked-application management unit may be configured to store, as the check result in association with the application identifier of the identified program and the caller, information including both (A) information indicating a result of checking if the identified program is under attack and (B) information indicating whether there is need to check to determine if the identified program is under attack.

According to the above configuration, the attack check determination unit can determine the safety of calling the program code from the caller identified by the caller identification unit, based on the previous check result stored in the checked-application management unit.

Specifically, the attack check determination unit may be configured to acquire the check result stored in association with the application identifier of the identified program in the checked-application management unit, determine that the check if the identified program is under attack is not to be made, when (A) the acquired check result represents that the identified program is not under attack or the identified program is under attack, and determine that the attack check unit is to check if the identified program is under attack, when (B) the acquired check result represents that there is need to check to determine if the identified program is under attack.

Moreover, the information processing device further includes a content identification unit configured to identify a data file which is about to be read by the identified program by calling the program code, using a content identifier which is an identifier indicating the data file; and a readability determination unit configured to determine whether the identified data file is to be read, wherein the readability determination unit is configured to: determine that the identified data file is to be read, when (A) the check result in association with the content identifier, the application identifier, and the caller is not stored in the checked-application management unit, or when (B) the check result in association with the content identifier, the application identifier, and the caller is stored in the checked-application management unit and the check result indicates that the identified program is not under attack; and determine that the identified data file is not to be read, when (C) the check result in association with the content identifier, the application identifier, and the caller is stored in the checked-application management unit and the check result indicates that the identified program has previously been attacked.

In general, the risk substantially increases when buffer overflow vulnerability is present in the program code and the program code reads a malicious file data aiming to attack, exploiting the buffer overflow. Thus, the safety can be accurately determined by recording in the checked-application management unit a result of checking the safety of a set of the caller of the program code and an identifier of a data file to be read by the called program code.

Moreover, when the check result in association with the content identifier, the application identifier, and the caller is not stored in the checked-application management unit, the readability determination unit may be configured to cause the checked-application management unit to store, in association with the content identifier, the application identifier, and the caller, information indicating that there is need to check to determine if a program identified by the application identifier is under attack.

Moreover, when the program is deleted or updated, the checked-application management unit may be configured to delete a check result that is stored in association with an application identifier of the deleted or updated program.

According to the above configuration, the information processing device can perform the read process when the buffer overflow vulnerability is corrected by updating the application. Moreover, after the deletion of the application, the information processing device can perform again the attack check process when an application that has the same application identifier is reinstalled.

Moreover, the checked-application management unit may be configured to store the check result in at least one of the information processing device including the checked-application management unit and an information processing device different from the information processing device including the checked-application management unit.

According to the above configuration, the safety of a file which has been read by other information processing device can be determined without check while the own apparatus has not read the file.

Moreover, when the identified data file is modified, the checked-application management unit may be configured to delete a check result stored in association with a content identifier indicating the modified data file.

According to the above configuration, even when existing content is modified to content that has a malicious program attached thereto, the malicious program can be detected.

It should be noted that the present invention can not only be implemented as such an information processing device but also as an information processing method having characteristic units, as steps, included in the information processing device , or as a program for causing a computer to execute such characteristic steps. In addition, such a program can, of course, be distributed by being stored in a storage medium such as CD-ROM (Compact Disc Read Only Memory) and via a transmission medium such as the Internet.

Furthermore, the present invention can be provided as a semiconductor integrated circuit (LSI) implementing a part or the while functionality of such an information processing device.

### [Advantageous Effects of Invention]

According to the information processing device of the present invention, the responsiveness of the system call process can be improved without compromising safety.

### [Brief Description of Drawings]

[FIG. 1] FIG. 1 is an overall block diagram of a content storage and display system according to an embodiment 1 of the present invention.
[FIG. 2] FIG. 2 is a software block diagram of a content storage and display device according to the embodiment 1 of the present invention.
[FIG. 3] FIG. 3 is a hardware block diagram of the content storage and display device according to the embodiment 1 of the present invention.
[FIG. 4] FIG. 4 is a block diagram of an update server according to the embodiment 1 of the present invention.
[FIG. 5] FIG. 5 is a diagram showing function call relationship according to the embodiment 1 of the present invention.
[FIG. 6] FIG. 6 is a block diagram of an OS which has an information processing device according to the embodiment 1 of the present invention.
[FIG. 7] FIG. 7 is a block diagram of an attack check result list according to the embodiment 1 of the present invention.
[FIG. 8] FIG. 8 is a block diagram of a check-necessary application list according to the embodiment 1 of the present invention.
[FIG. 9] FIG. 9 is a block diagram showing another configuration of the information processing device according to the embodiment 1 of the present invention.
[FIG. 10] FIG. 10 is a flowchart of a check need determination process according to the embodiment 1 of the present invention.
[FIG. 11] FIG. 11 is a flowchart of a file read process according to the embodiment 1 of the present invention.
[FIG. 12] FIG. 12 is a block diagram of an information processing device according to an embodiment 2 of the present invention.
[FIG. 13] FIG. 13 is a block diagram of an attack check result list according to the embodiment 2 of the present invention.
[FIG. 14] FIG. 14 is a flowchart of a check need determination process according to the embodiment 2 of the present invention.
[FIG. 15] FIG. 15 is an overall block diagram of a content storage and display system according to an embodiment 3 of the present invention.
[FIG. 16] FIG. 16 is a block diagram of an information processing device according to the embodiment 3 of the present invention.
[FIG. 17] FIG. 17 is a flowchart of a check need determination process according to the embodiment 3 of the present invention.
[FIG. 18] FIG. 18 is a diagram showing an example of a configuration of a stack structure.
[FIG. 19] FIG. 19 is a diagram showing an example of a configuration of a conventional OS.

### [Description of Embodiments]

Hereinafter, embodiments of an information processing device according to the present invention will be described in detail, with reference to the accompanying drawings.

Hereinafter, embodiments of the present invention will be described in detail with accompanying drawings. It should be noted that embodiments described below are each merely a preferred illustration of the present invention. Values, components, disposition or a form of connection between the components, steps, and the order of the steps are merely illustrative, and are not intended to limit the present invention. The present invention is limited only by the scope of the appended claims. Thus, among components of the below embodiments, components not set forth in the independent claims indicating the top level concept of the present invention are not necessary to achieve the present invention but will be described as components for preferable embodiments.

### (Embodiment 1)

An information processing device according to an embodiment 1 of the present invention is a content storage and display device which loads and stores image data from an apparatus such as a camera or a PC, and displays the image data in response to a request from a user.

### <Configuration of Content Storage and Display System 1000>

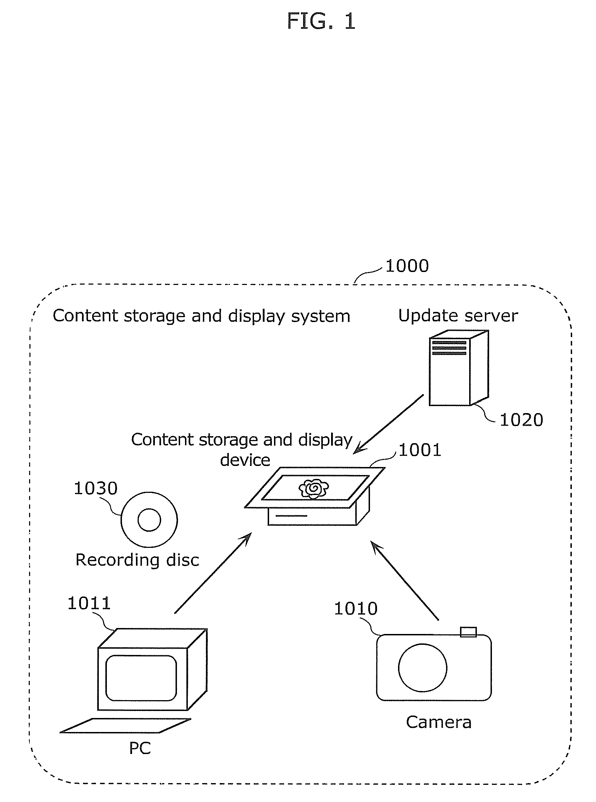

FIG. 1 is a block diagram of a content storage and display system 1000 according to the embodiment 1 of the present invention.

In FIG. 1, the content storage and display system 1000 includes a content storage and display device 1001, a camera 1010, a PC 1011, and an update server 1020.

The content storage and display device 1001 loads and stores image data from the camera 1010, the PC 1011, and the like. Moreover, the content storage and display device 1001 displays the stored image data in response to a request from a user. Furthermore, the content storage and display device 1001 includes a read unit for reading a recording medium such as a recording disc 1030, and can load image data taken by those other than the user.

To achieve the functionality of storing and displaying the content, the content storage and display device 1001 executes, at a CPU (Central Processing Unit), one or more programs having application identifiers which are unique identifiers.

The camera 1010 is connected to the content storage and display device 1001, using a USB (Universal Serial Bus), a wireless LAN (Local Area Network), and a like. The camera 1010 records image data taken by a user at an event such as travel in a nonvolatile memory incorporated in the camera 1010 or a removable recording medium. Moreover, when connected to the content storage and display device 1001, the camera 1010 transfers the recorded image data to the content storage and display device 1001. Alternatively, the image data recorded in the recording medium can be transferred to the content storage and display device 1001 by the user removing the recording medium from the camera 1010 and mounting the recording medium onto the content storage and display device 1001.

The PC 1011 is a computer connected to a network and is used for Web browsing. Moreover, the PC 1011 is also connected to the content storage and display device 1001 via the network. Image data attached to mail or image data downloaded at Web browsing is loaded from the PC 1011 into the content storage and display device 1001 via the network.

The update server 1020 is connected to the content storage and display device 1001 via the network. The update server 1020 stores update software for the content storage and display device 1001, and transfers the update software to the content storage and display device 1001 in response to a request from the content storage and display device 1001. The update software is created, for example, when a failure of software running in the content storage and display device 1001 is found or to add functionality to the software.

The recording disc 1030 is a recording medium recording the image data.

Moreover, the content storage and display device 1001 has the information processing device according to the present invention.

### <Software Configuration of Content Storage and Display Device 1001>

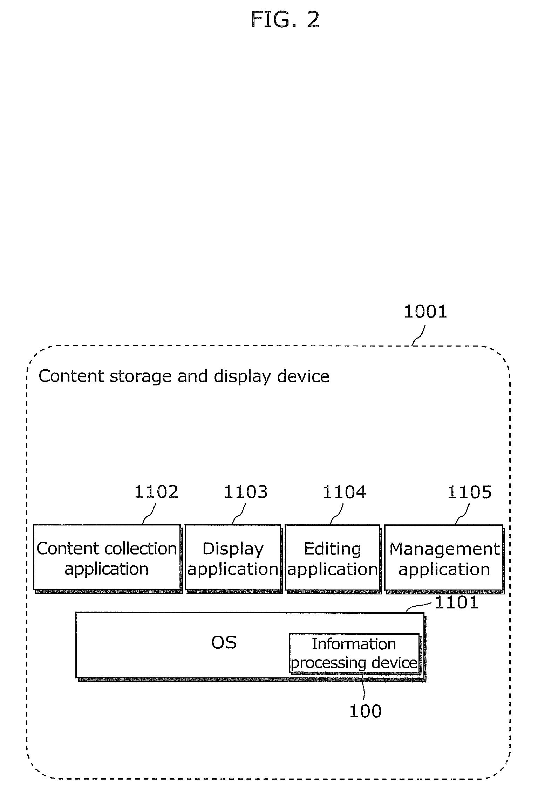

FIG. 2 is a software block diagram of the content storage and display device 1001 according to the embodiment 1 of the present invention.

In FIG. 2, the content storage and display device 1001 includes an OS 1101, a content collection application 1102, a display application 1103, an editing application 1104, and a management application 1105.

The OS 1101 has an information processing device 100. The OS 1101 loads on a memory and executes applications (programs such as the content collection application 1102, the display application 1103, the editing application 1104, and the management application 1105) running on the OS 1101. Moreover, when an application requests the use of a resource managed by the OS 1101, the OS 1101 confirms if the requesting application has the authorization to utilize the resource. If it is determined that the requesting application has the authorization as a result of the confirmation, the OS 1101 provides the application with the resource via the information processing device 100. Examples of the request from applications to the OS 1101 includes read/write requests from/to a file, and also a connection request to other apparatus connected via the network.

The content collection application 1102 is an application which collects the image data recorded in the camera 1010, the PC 1011, or the recording disc 1030, and stores the collected image data in the content storage and display device 1001. The content collection application 1102 monitors whether an apparatus such as the camera 1010 establishes connection via a USB or the wireless LAN, and if detected the connection, the content collection application 1102 collects image data recorded in the apparatus or a recording medium mounted onto the apparatus. Moreover, if detected connection established by an apparatus such as the PC 1011 while monitoring the network connection, the content collection application 1102 collects image data recorded in the apparatus. The content collection application 1102 saves and stores the collected image data in a nonvolatile memory device in the content storage and display device 1001.

The display application 1103 is an application which displays image data, stored by the content collection application 1102, on a display device such as a liquid crystal display. The display application 1103 displays a list of thumbnail images attached to the image data, or one piece of image data specified by a user, for example. Moreover, the display application 1103 performs a slideshow display displaying a plurality of pieces of image data selected by a user at regular intervals.

The editing application 1104 is an application which edits the image data saved in the content storage and display device 1001. The editing application 1104 saves the edited image data as new image data or save the edited image data over original image data, in accordance with selection by the user. Moreover, the editing application 1104 deletes from the content storage and display device 1001 image data that is determined as unwanted by the user.

The management application 1105 manages applications and the OS installed in the content storage and display device 1001. The management application 1105 communicates with the update server 1020 to periodically check if update software for the applications and the OS that are installed in the content storage and display device 1001 is present. If detected the update software, the management application 1105 notifies the user, receives corresponding update software for the applications and the OS from the update server 1020, and performs an update process.

### <Hardware Configuration of Content Storage and Display Device 1001>

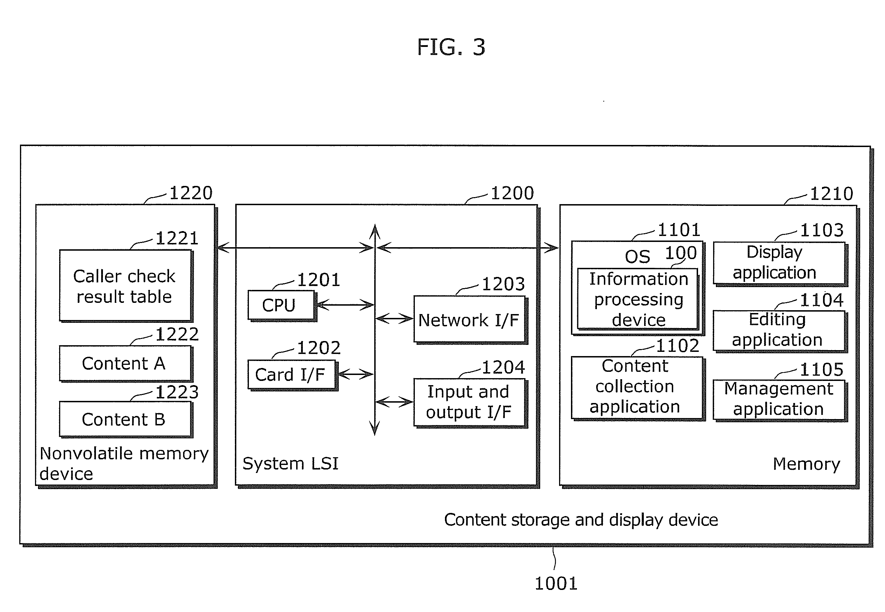

FIG. 3 is a hardware block diagram of the content storage and display device 1001 according to the embodiment 1 of the present invention.

In FIG. 3, the content storage and display device 1001 includes a system LSI 1200, a memory 1210, and a nonvolatile memory device 1220.

The system LSI 1200 includes a CPU (Central Processing Unit) 1201, a card I/F (Interface) 1202, a network I/F 1203, and an input and output I/F 1204.

The CPU 1201 executes instruction code included in the OS 1101 or each application stored in the memory 1210 to control an overall operation of the content storage and display device 1001. Moreover, the CPU 1201 has two modes: privilege mode; and non-privilege mode. The OS 1101 operates in the privilege mode and is freely accessible to various resources such as the memory 1210, the card I/F 1202, the network I/F 1203, or the input and output I/F 1204. Thus, the information processing device 100 according to the present invention included in the OS 1101 operates in the privilege mode.

Moreover, the content collection application 1102, the display application 1103, the editing application 1104, and the management application 1105 operate in the non-privilege mode and are accessible only to regions set by the OS 1101. The memory 1210 stores therein the OS 1101, the content collection application 1102, the display application 1103, the editing application 1104, and the management application 1105. It should be noted that FIG. 3 shows when each component of the software configuration shown in FIG. 2 is loaded in the memory 1210.

The nonvolatile memory device 1220 stores therein a caller check result table 1221, content A 1222, and content B 1223. Moreover, although not shown, the nonvolatile memory device 1220 stores therein each component of the software configuration shown in FIG. 2 before the component is loaded into the memory 1210. Specifically, the content collection application 1102, the display application 1103, the editing application 1104, and the management application 1105 which are shown in FIG. 2 correspond to the content collection application 1102, the display application 1103, the editing application 1104, and the management application 1105, respectively, which are stored in the memory 1210 shown in FIG. 3. Software for implementing each component is executed on the CPU 1201, thereby implementing each function.

An input-and-output device such as the liquid crystal display not shown in FIG. 3 is further included in the content storage and display device 1001. However, the input-and-output device is not a principle of the present invention, and thus the description thereof will be omitted. Moreover, peripheral circuits not shown in FIG. 3 are further included in the system LSI 1200. However, the peripheral circuits are not principles of the present invention, and thus the description thereof will be omitted. Moreover, the memory 1210 may further store therein applications not shown in FIG. 2 or FIG. 3, or a work area for use when processing the image data. Moreover, the nonvolatile memory device 1220 may further store therein applications or content which are not shown in FIG. 2 or FIG. 3.

### <Configuration of Update Server 1020>

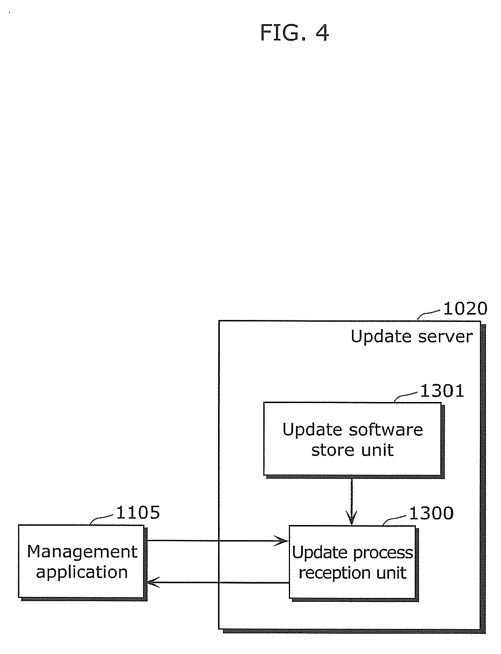

FIG. 4 is a block diagram of the update server 1020 according to the embodiment 1 of the present invention.

In FIG. 4, the update server 1020 includes an update process reception unit 1300 and an update software store unit 1301.

The update process reception unit 1300 receives a query from the management application 1105 of the content storage and display device 1001. If update is necessary as a result of the query, the update process reception unit 1300 cooperates with the management application 1105 to update the software in the content storage and display device 1001. In the update process, the update process reception unit 1300 acquires update software from the update software store unit 1301 and sends the update software to the management application 1105.

The update software store unit 1301 stores therein the update software necessary for updating the software in the content storage and display device 1001.

### <Timing to Perform Attack Check Process>

An attack check process (namely, a process for determining whether the application is under attack) need not be performed prior to attack and need be performed after the attack. That is, if timing at which an attack is possibly made is found, the attack check process may be performed immediately thereafter. This is because it is difficult to determine, before attack is made, whether the application is under attack, that is, in a state where a malicious program is not in operation on a call stack used by an application being executed. Thus, it is desirable that the attack check process can be performed immediately after the attack is made.

The content storage and display device 1001 according to the embodiment 1 of the present invention is a device, unlike PCs, unable to allow a user to freely add applications or download image data or applications via the network. Thus, to attack the content storage and display device 1001, an attacker has no choice but to tamper image data such as the image data to be loaded into the content storage and display device 1001. For example, the attacker creates image data (content having a malicious program attached thereto) tampered so as to attack the vulnerability (a buffer overflow or the like) of the display application 1103 which displays the image data in the content storage and display device 1001. The attacker attacks the content storage and display device 1001 by causing the content storage and display device 1001 to load the image data tampered as described above.

At the attack, the content storage and display device 1001 is attacked at timing after reading the content having the malicious program attached thereto and when attempting to perform a display process in the display application 1103. Thus, the attack check process need be performed at the timing after the end of the read process on the image data.

Thus, in the embodiment 1 of the present invention, the attack check process is performed at the timing after the content storage and display device 1001 has performed the read process on the image data and when a subsequent system call request is made.

Moreover, in the case of an attack exploiting the buffer overflow vulnerability, the buffer overflow surely occurs and the malicious program runs once the display application 1103 reads the content having the malicious program attached thereto. That is, if the display application 1103 is attacked, it can be determined that image data read then is content having the malicious program attached thereto, and if the display application 1103 is not attacked, it can be determined that normal image data is read.

Thus, when image data which has been read previously and no attack has been made therefrom is read, the content storage and display device 1001 does not perform the attack check process at the timing for the subsequent system call request. This can omit to perform the attack check process.

However, depending on a portion of the display application 1103 at which the image data is processed, performing the attack check process may or may not be omitted.

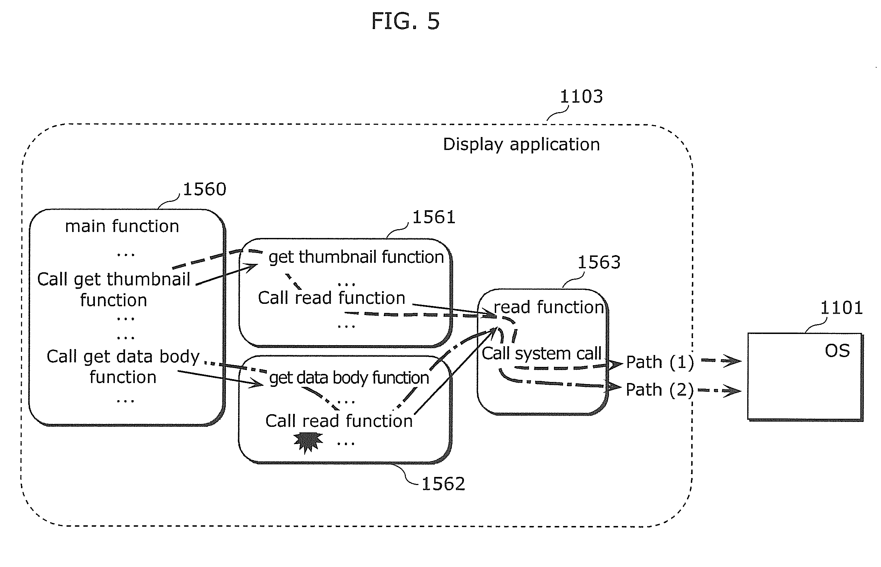

FIG. 5 is a schematic view showing function call relationship within the display application 1103.

In FIG. 5, the display application 1103 includes a main function 1560, a get thumbnail function 1561, a get data body function 1562, and a read function 1563.

The main function 1560 displays a list of the image data stored in the content storage and display device 1001 using the thumbnails, performs processing for displaying image data selected by the user from the thumbnails.

The get thumbnail function 1561 acquires thumbnail data from the image data stored in the content storage and display device 1001.

The get data body function 1562 acquires data of image body from the image data stored in the content storage and display device 1001.

Upon request from the get thumbnail function 1561 or the get data body function 1562, for reading image data, the read function 1563 makes a file read system call request to the OS 1101.

In the display application 1103 shown in FIG. 5, the case is considered where, for example, the buffer overflow vulnerability is present in the get data body function 1562. When performing the thumbnails display, the display application 1103 makes the file read system call request from the main function 1560 to the OS 1101 via the get thumbnail function 1561 and the read function 1563 (a path 1). In this case, there is no function having the buffer overflow vulnerability on the path 1 and therefore no attack can be made. However, it is unsafe to determine, for solely this reason, that the attack check process may not be performed when the user later selects the same image to display the image data body. This is because, as described above, the attack exploiting the buffer overflow vulnerability is executed and detectable only after the malicious data is called from a function having the buffer overflow vulnerability.

Specifically, when displaying the image data body, the file read system call request is made from the main function 1560 to the OS 1101 via the get data body function 1562 and the read function 1563 (a path 2). Here, it is assumed that the buffer overflow vulnerability is present in the get data body function 1562 on the path 2. In this case, if the read image data is the content having the malicious program attached thereto, the content storage and display device 1001 is attacked by the malicious program.

As described above, if whether to omit to perform the attack check process is determined merely based on whether the image data has been read previously, a possibility of being attacked remains when the vulnerability is present in the application. Thus, to determine whether there is need for the attack check, a mechanism is required which identifies the path in the function call relationship and makes determination in consideration with the identified path.

Thus, the information processing device 100 according to the embodiment 1 of the present invention determines a difference in the path, based on a fact that if the path is different, functions executed on the way are different. Specifically, if the path is different, the difference in the path is determined based on a fact that a value of a stack pointer of the application (for example, the display application 1103 in the case of FIG. 5) when making the system call request has a different value. Thus, as will be described below, in addition to the application identifiers and a content identifier, a caller address and a stack point value at which the application has made the system call request are also stored in association with a check result in an attack check result list 1530 which is used by an attack check determination unit 1510 for the determination.

### <Configuration of Information Processing Device 100>

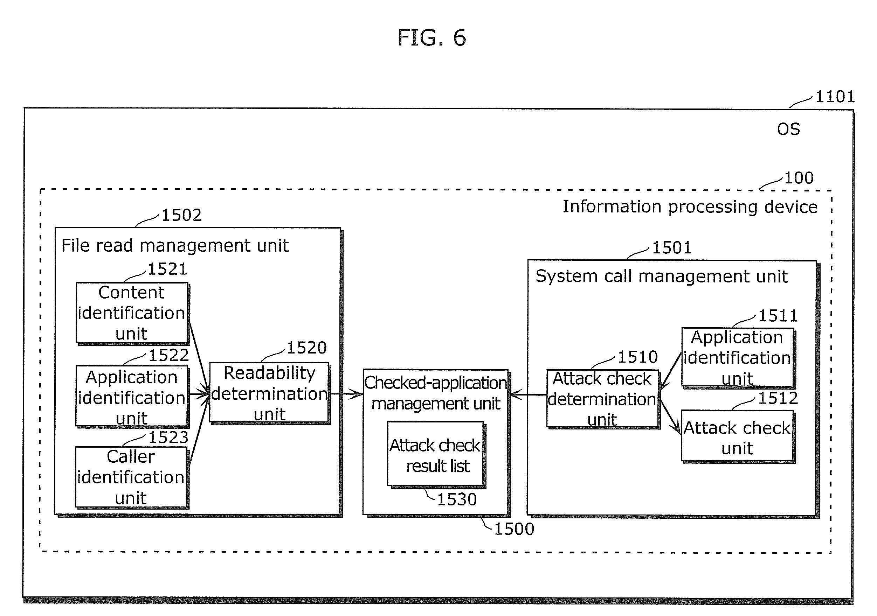

FIG. 6 is a block diagram of the information processing device 100 included in the OS 1101 according to the embodiment 1 of the present invention.

In FIG. 6, the information processing device 100 includes a checked-application management unit 1500, a system call management unit 1501, and a file read management unit 1502.

The checked-application management unit 1500 manages check results obtained by checking whether an application is under attack. In addition, the checked-application management unit 1500 manages applications that need be checked whether being under attack.

Specifically, the checked-application management unit 1500 stores a check result in association with a caller and the application identifier of the identified program. The check result is information including both (A) a result obtained by checking whether the program (application) identified by an application identification unit 1511 is under attack and (B) information indicating whether there is need to check to determine if the identified program is under attack.

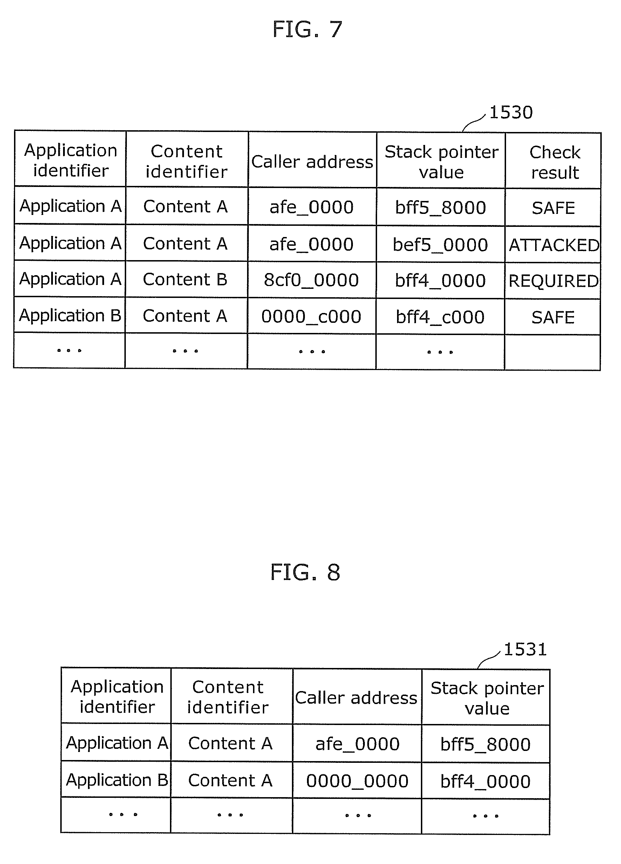

More specifically, the checked-application management unit 1500 has the attack check result list 1530 shown in FIG. 7. The checked-application management unit 1500 manages the check result by updating the attack check result list 1530.

It should be noted that in the embodiments 1 to 3 of the present invention, "the application is under attack" means that the buffer overflow vulnerability present in the application is attacked and the malicious program is running on the stack of the application.

FIG. 7 shows the attack check result list 1530 by way of example. The attack check result list 1530 includes the application identifier, the content identifier, the caller address, the stack point value, and the check result.

The application identifier is an identifier identifying the application running on the OS 1101. The application identifier is a file name of the application, for example, in the embodiment 1 of the present invention.

The content identifier is an identifier identifying an image data file stored in the nonvolatile memory device 1220. The content identifier is a file name of the image data file, for example, in the embodiment 1 of the present invention.

The caller address is an address of executable code of the application when the application makes a system call request. For example, the caller address is executable code of the display application when the display application makes an image data read request. That is, the caller address is an address used as a return address which is used to return the processing from the OS 1101 to the display application in the embodiment 1 of the present invention.

The stack point value is a stack pointer value of an application when the application makes a system call request. For example, the stack point value is a stack pointer value of the display application when the display application makes an image data read request.

The checked-application management unit 1500 receives the application identifier, the content identifier, the caller address, and the stack point value from the file read management unit 1502.

In the attack check result list 1530, any of the following three values are stored as a check result by an attack check unit 1512: check results "SAFE" and "ATTACKED" indicating whether the application is under attack, and a check result "REQUIRED" indicating that there is need to check if the application is under attack. Here, the check result "SAFE" indicates that a program (application) having a corresponding application identifier is not under attack. Moreover, the check result "ATTACKED" indicates that the program is under attack. Moreover, the check result "REQUIRED" indicates that there is need to check to determine if the program is under attack. It should be noted that the expressions "SAFE", "ATTACKED", and "REQUIRED" are merely illustrative and any other characters and symbols may be stored in the attack check result list 1530. For example, "OK", "NG", and "UNKNOWN" may be used instead of "SAFE", "ATTACKED", and "REQUIRED", respectively.

The checked-application management unit 1500 receives the check result from the attack check unit 1512 included in the system call management unit 1501.

It should be noted that the attack check result list 1530 may include the application identifier, the content identifier, the caller address, the stack point value, and the check result, and the order of including them is not limited thereto. For example, the order may be the content identifier, the application identifier, the caller address, the stack point value, and the check result or may be the check result, the application identifier, the content identifier, the caller address, and the stack point value.

Moreover, the data structure of the attack check result list 1530 is not necessarily in the format of the table shown in FIG. 7 and may be any format insofar as the combination of the application identifier, the content identifier, the caller address, the stack point value, and the check result is identifiable. For example, a table may be used which includes the application identifiers on the horizontal axis and the content identifiers on the vertical axis and has links to a list of combinations of the caller address and the stack point values for each combination of the application identifier and the content identifier may be provided.

Referring back to FIG. 6, the checked-application management unit 1500 receives from the system call management unit 1501 a query as to whether there is need to check the application indicated by the application identifier. When received the query from the system call management unit 1501, the checked-application management unit 1500 acquires the result of checking the application from the attack check result list 1530 and returns the acquired check result.

Moreover, the checked-application management unit 1500 receives the application identifier and the check result which is obtained by checking whether the application is under attack, from the attack check unit 1512 included in the system call management unit 1501, and records the received check result in the attack check result list 1530.

The system call management unit 1501 includes the attack check determination unit 1510, the application identification unit 1511, and the attack check unit 1512.

The system call management unit 1501 uses the attack check determination unit 1510 to determine whether the application from which the system call is requested is under attack. If it is determined that the application is not under attack, the system call management unit 1501 executes the system call process requested from the application. If it is determined that the application is under attack, the system call management unit 1501 returns error to the application from which the system call is requested. It should be noted that details of the check need determination process performed when the system call request is made will be described below using a flowchart.

The attack check determination unit 1510 determines whether there is need to check if the application from which the system call is requested is under attack. Specifically, the attack check determination unit 1510 determines, based on the caller of the program identified by the application identification unit 1511, whether a check if the identified program is under attack is to be made.

More specifically, the attack check determination unit 1510 acquires, from the attack check result list 1530 included in the checked-application management unit 1500, a check result stored in association with the application identifier of the identified program. If the acquired check result indicates that the program (application) is not under attack or the program (application) is under attack, the attack check determination unit 1510 determines that the check if the application is under attack is not to be made. On the other hand, if the acquired check result indicates that there is need to check to determine if the application is under attack (namely, the safety is unknown), the attack check determination unit 1510 determines that the attack check unit 1512 is to check the application.

Further specifically, the attack check determination unit 1510 acquires from the checked-application management unit 1500 the result of an attack check of the application from which the system call is requested. If the acquired check result is "REQUIRED", the attack check determination unit 1510 requests the attack check unit 1512 to check whether the application is under attack. Moreover, if the check result is "SAFE", the check is not performed and the system call management unit 1501 executes the system call requested from the application. Moreover, if the check result is "ATTACKED", the system call management unit 1501 returns error to the application from which the system call is requested. Moreover, the attack check determination unit 1510 requests the checked-application management unit 1500 to register the check result acquired from the attack check unit 1512, irrespective of the check result.

The application identification unit 1511 identifies the application from which the system call is requested. Specifically, the application identifier of the program being executed in the content storage and display device 1001 is acquired, thereby identifying the application from which the system call is requested.

In the embodiment 1 of the present invention, the application identification unit 1511 uses a file name stored in the structure for process management managed by in the OS 1101 to identify the application. The application identification unit 1511 informs the attack check determination unit 1510 of the file name of the application which is the application identifier.

If the attack check determination unit 1510 determines that the attack check is to be performed on the application identified by the application identification unit 1511, the attack check unit 1512 checks if the application (namely, the application from which the system call is requested) is under attack.

The check method is described in detail in, for example, PTL 1 or PTL 2 that are described above. Moreover, other check method may be used.

The file read management unit 1502 includes a readability determination unit 1520, a content identification unit 1521, an application identification unit 1522, and a caller identification unit 1523.

When requested to read a file by the system call from the application, the file read management unit 1502 is called by the system call management unit 1501 and performs a file read process. The file read management unit 1502 refers to the attack check result list 1530 upon performing the file read process, to determine whether the read process is to be performed. It should be noted that details of the file read process will be described below, using a flowchart.

The readability determination unit 1520 determines whether the data file identified by the content identification unit 1521 described below is to be read. That is, the readability determination unit 1520 determines that the identified data file is to be read if the following is indicated: (A) the check result in association with the content identifier, the application identifier, and the caller is not stored in the checked-application management unit 1500 or (B) if the check result in association with the content identifier, the application identifier, and the caller is stored in the checked-application management unit 1500 and the check result indicates that the program (application) identified by the application identification unit 1511 is not under attack.

Moreover, if the check result in association with the content identifier, the application identifier, and the caller is stored in the checked-application management unit 1500 and the check result indicates that the program (application) identified by the application identification unit 1511 has previously been attacked, the readability determination unit 1520 determines that the identified data file is not to be read.

More specifically, the readability determination unit 1520 acquires the attack check result from the checked-application management unit 1500 and, based on the acquired check result, determines whether the data file is to be read. If the check result is "SAFE", the readability determination unit 1520 determines that the data file is readable, and if the check result is "ATTACKED", determines that the data file is unreadable.

Moreover, if the check result is not registered in the attack check result list 1530, the readability determination unit 1520 determines that the data file is readable and requests the checked-application management unit 1500 to register "REQUIRED" as the check result. That is, if the check result in association with the content identifier, the application identifier, and the caller is not stored in the checked-application management unit when the determination is made, the readability determination unit 1520 causes the checked-application management unit 1500 to store, in association with the content identifier, the application identifier, and the caller, information indicating that there is need to check to determine if the program identified by the application identification unit 1511 is under attack.

More specific description will be described below.

The content identification unit 1521 uses the content identifier which is an identifier indicative of the data file to identify a data file to be read by the program (application) identified by the application identification unit 1511 by calling the program code (namely, the system call).

The content identification unit 1521, for example, identifies the image data which is read by the display application 1103 operated by a user. In the embodiment 1 of the present invention, as a method for the content identification unit 1521 to identify a data file, a method is used in which a file name of the image data which is stored in a file identifier informed of upon file read is requested is used to identify the image data. The content identification unit 1521 informs the readability determination unit 1520 of the file name of the image data as the content identifier.

The application identification unit 1522 has the same functionality as the application identification unit 1511 included in the system call management unit 1501 except that the application identification unit 1522 informs the readability determination unit 1520 of the application identifier. That is, the application identification unit 1511 acquires the application identifier to refer to the attack check result list 1530. On the other hand, the application identification unit 1522 acquires the application identifier to update the attack check result list 1530.

The caller identification unit 1523 identifies a portion of the program from which the program code is called when the program (application) identified by the application identification unit 1511 calls the program code. Specifically, the caller identification unit 1523 identifies a portion of the application from which the caller has called the file read process of the OS 1101.

As a method for identifying the caller, the caller identification unit 1523 according to the embodiment 1 of the present invention uses an address and a stack pointer value of the executable code of the application when the application makes the image data read request, to identify the caller. That is, the caller identification unit 1523 uses (A) the return address which is an address in a memory indicating a return destination to return the execution process back to the identified program after the execution process of the program code and (B) a stack pointer value of a call stack used by the identified program that is obtained when the program code (the system call) is called from the program (application) identified by the application identification unit 1511, to identify the caller. More specifically, to identify the caller, the caller identification unit 1523 uses the return address to return to the application after the end of the file read process, and the stack pointer value of the application when the file read request is made.

It should be noted that while in the embodiment 1 of the present invention, the attack check determination unit 1510 uses the attack check result list 1530 to determine whether the attack check process is to be performed, the present invention is not limited thereto. For example, the checked-application management unit 1500 may manage, separately from the attack check result list 1530, an application, on which the attack check process need be performed, as a check-necessary application list 1531. The structure of the check-necessary application list 1531 is shown in FIG. 8 by way of example. In this case, the checked-application management unit 1500 stores only "SAFE" or "ATTACKED" as the check result in the attack check result list 1530.

In this case, when requested from the readability determination unit 1520 to register "REQUIRED" as the check result, the checked-application management unit 1500 registers the requested application in the check-necessary application list 1531 shown in FIG. 8. Moreover, the attack check determination unit 1510 queries as to whether the application identifier of the application from which the system call is requested is registered in the check-necessary application list 1531 included in the checked-application management unit 1500.

Moreover, if the check result by the attack check unit 1512 is "ATTACKED", the attack check determination unit 1510 may request the checked-application management unit 1500 to set "ATTACKED" to all check results relating to the same content identifier as the content identifier the check result of which is "ATTACKED". Specifically, the checked-application management unit 1500 may set "ATTACKED" to all rows of check results, in the attack check result list 1530, which have the same content identifier as the content identifier the previous check results of which include "ATTACKED".

Furthermore, "ATTACKED" may be set to all check results relating to the same application identifier as the application identifier the check result of which is "ATTACKED". Specifically, the checked-application management unit 1500 may set "ATTACKED" to all rows of check results, in the attack check result list 1530, which have the same application identifier as the application identifier the previous check result of which includes "ATTACKED".

Moreover, in the case of image data or the like which has the same content identifier as the content identifier the previous check results of which includes "ATTACKED", the readability determination unit 1520 may not read the image data or the like. Furthermore, the readability determination unit 1520 may not execute the call from the same caller address as the caller address the previous check results of which include "ATTACKED", and may not read the image data or the like. Moreover, the readability determination unit 1520 may perform the same process with respect to the caller address and the stack pointer value, in addition to the application identifier.

It should be noted that the system call management unit 1501 and the file read management unit 1502 may not exist separately. For example, the file read management unit 1502 may be included in the system call management unit 1501.

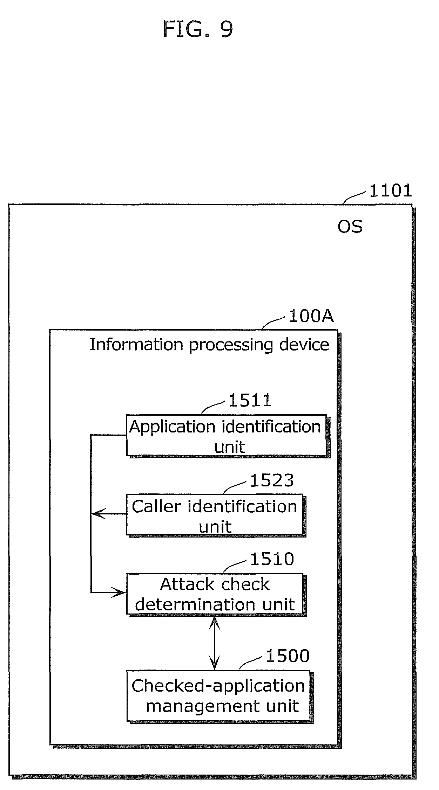

FIG. 9 is a block diagram showing another configuration of the information processing device.

As shown in FIG. 9, an information processing device 100A includes the application identification unit 1511, the caller identification unit 1523, the attack check determination unit 1510, and the checked-application management unit 1500.

This configuration allows the information processing device 100A to achieve the same advantageous effects obtained from the information processing device 100 shown in FIG. 6.

That is, the information processing device 100A can acquire from the application identification unit 1511 the application identifier identifying the application from which the system call is requested.

Moreover, the information processing device 100A can acquire from the caller identification unit 1523 a stack pointer in an execution stack of the application and a return address when the application identified by the application identifier makes the system call request.

Moreover, by the attack check determination unit 1510 querying to the checked-application management unit 1500 having the attack check result list 1530, the information processing device 100A can determine whether the safety is already confirmed with respect to the system call request passing through a call path identified using the stack pointer and the return address.

Thus, the configuration shown in FIG. 9 also achieves the same advantageous effects of the invention as the information processing device 100. Thus, by omitting the attack check on the system call request passing through the call path once the safety of which is confirmed, the information processing device 100A can quickly process the system call request.

It should be noted that while in the embodiment 1 of the present invention, when the check result is not registered in the attack check result list 1530, the readability determination unit 1520 requests the checked-application management unit 1500 to register "REQUIRED" as the check result, the present invention is not limited thereto. The readability determination unit 1520 may determine that there is need to check for data file, depending on a source from which the application requests to load image data. Here, "SAFE" is registered as the check result in stead of "REQUIRED". Examples of the source the readability determination unit 1520 determines that there is no need to check includes the camera 1010 image data of which cannot be rewritten by the attacker.

Moreover, notwithstanding the foregoing, the check may be conducted only when the data file is loaded from a specific source. Here, the readability determination unit 1520 registers "REQUIRED" as the check result only when requested to read image data loaded from the specific source. Moreover, in the case of other sources, the readability determination unit 1520 registers "SAFE" as the check result. Examples of the load source to be checked include a PC or the like image data of which can be rewritten by the attacker. Moreover, all image data loaded via network such as the Internet may be checked.

### <Check Need Determination Process>

The system call management unit 1501 uses the attack check determination unit 1510 to determine whether the application from which the system call is requested is under attack. The system call management unit 1501 executes a requested system call process only when it is determined that the application is not under attack, to prevent execution of malicious system call requests. Here, it is determined whether there is need to check if the application from which the system call is requested is under attack, and the check process is executed only when there is the need, thereby accelerating the processing by the OS 1101 at the system call request.

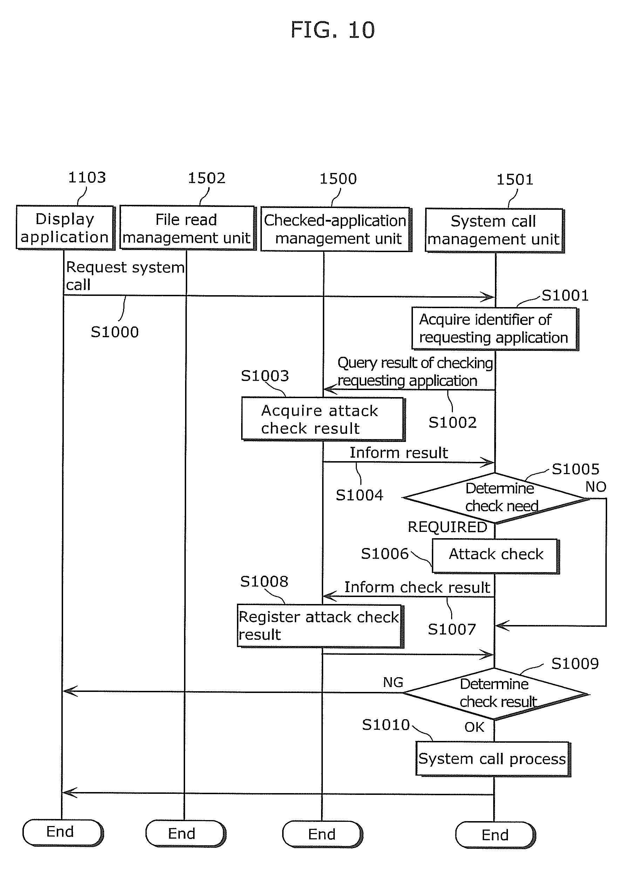

Hereinafter, a check need determination process will be described using the flowchart shown in FIG. 10, in which it is determined, when the display application 1103 requests the OS 1101 for the system call, whether there is need to check if the display application 1103 is under attack.

First, the display application 1103 requests the system call management unit 1501 of the information processing device 100 included in the OS 1101, for the system call (S1000).

The system call management unit 1501 uses the application identification unit 1511 to acquire an identifier of the requesting application from which the system call is requested (S1001). The application identification unit 1511 acquires an application file name stored in the structure for process management managed by the OS 1101, and uses the file name as an application identifier.

Next, the attack check determination unit 1510 included in the system call management unit 1501 queries the checked-application management unit 1500 for the previous attack check result with respect to the application from which the system call is requested, to determine whether there is need to check if the application from which the system call is requested is under attack (S1002). Here, the attack check determination unit 1510 informs the checked-application management unit 1500 of the application identifier acquired in S1001.

The checked-application management unit 1500 acquires, as the attack check result, a set of data associated with the application identifier which is informed of by the attack check determination unit 1510 from the attack check result list 1530 (S1003). The set of data associated with the application identifier includes, for example, the application identifier, the content identifier, the caller address, the stack point value, and the check result. That is, the set of data associated with the application identifier is information included on a row, among rows of the attack check result list 1530, on which the same application identifier as the application identifier informed of is included.

The checked-application management unit 1500 informs the attack check determination unit 1510 of the attack check result acquired in S1003 (S1004).

The attack check determination unit 1510 included in the system call management unit 1501 performs the check need determination, based on the received attack check result (S1005). Specifically, if "REQUIRED" is included on a row "Check result" in the received attack check result, the attack check determination unit 1510 determines that there is need for the attack check ("REQUIRED" in S1005), and if not included, determines that there is no need for the attack check ("NO" in S1005).

If it is determined that the check result is "REQUIRED" in step S1005, the attack check determination unit 1510 uses the attack check unit 1512 to check whether the application from which the system call is requested is under attack (S1006). The check method is described in detail in, for example, PTL 1 or PTL 2. Moreover, other method may be used.

After the check, the system call management unit 1501 requests the checked-application management unit 1500 to register the check result (S1007). The attack check determination unit 1510 informs the checked-application management unit 1500 of a set of data obtained by rewriting a set (namely, a set of the application identifier, the content identifier, the caller address, the stack point value, and the check result) of data the check result of which is "REQUIRED", among the result received in step S1004, with the check result obtained in step S1006.

The checked-application management unit 1500 reflects to the attack check result list 1530 the set of data received from the attack check determination unit 1510 (S1008). Specifically, the checked-application management unit 1500 updates, with the received the check result, the check result for a row, among the rows included in the attack check result list 1530, that corresponds to the set of data received from the attack check determination unit 1510.

Next, the system call management unit 1501 determines a result of the attack check (S1009). Specifically, as the result of the attack check in step S1006, if the application is not under attack, the system call management unit 1501 determines that the check result is "OK" in step S1009, and if the application is under attack, determines that the check result is "NG".

If the system call management unit 1501 determines that the check result is "OK" in step S1009, the system call management unit 1501 executes the process of the system call requested from the application (S1010). Moreover, after the end of the system call process, the system call management unit 1501 returns a result of the system call process to the display application 1103.

On the other hand, if the system call management unit 1501 determines that the check result is "NG" in step S1009, the system call management unit 1501 returns error to the display application 1103.

In the embodiment 1 of the present invention, the information processing device 100 performs the above-described check need determination process upon the system call process, thereby allowing omission of unnecessary attack check process as to whether the application is under attack. Thus, the information processing device 100 according to the present embodiment allows acceleration of the processing performed by the OS 1101 at the system call request.

### <File Read Process>

Next, a process performed by the file read management unit 1502 when a system call involving file read will be described.

Prior to the file read process, the file read management unit 1502 performs (1) determination as to whether the file may be read and (2) determination as to whether there is need to perform the attack check process at the system call process after the file read process (namely, the check need determination process). In the check need determination process, the check process is performed only when it is determined that there is need for check in the file read process. This prevents a malicious file from being read and spread of attack by the attacker. Moreover, since an instruction can be given to execute the check process only when there is need for check, the check process can be omitted and the process performed by the OS 1101 upon the system call request can be accelerated.

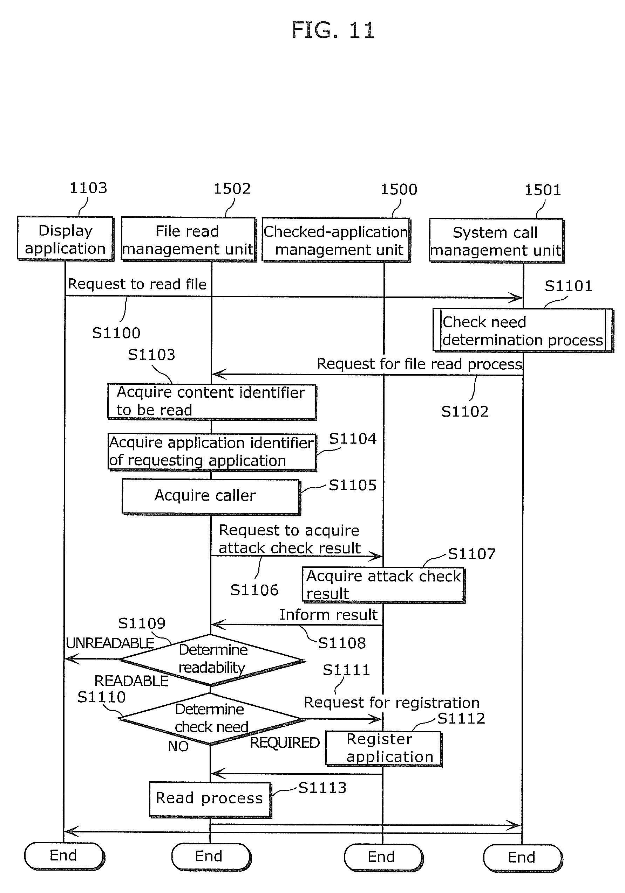

Hereinafter, the file read process when the display application 1103 requests the OS 1101 to read a file will be described using a flowchart shown in FIG. 11.

The display application 1103 requests the system call management unit 1501 to read a file (S1100).

The attack check determination unit 1510 included in the system call management unit 1501 performs the check need determination process shown in FIG. 10 to determine whether there is need to check if the display application 1103 is under attack (S1101). If it is determined, in the check need determination process, that the system call ("OK" in S1009 shown in FIG. 10) is to be performed, the system call management unit 1501 requests the file read management unit 1502 to perform the file read process (S1102).

The file read management unit 1502 uses the content identification unit 1521 to acquire the content identifier which is an identifier of content requested to be read (S1103). The content identification unit 1521 acquires an image data file name which is stored in the file identifier and informed of upon the read request, and uses the file name as the content identifier.

Moreover, the file read management unit 1502 uses the application identification unit 1522 to acquire the application identifier of the application from which the file read is requested (S1104). The application identification unit 1522 acquires an application file name stored in the structure for process management managed by the OS 1101 and uses the file name as an application identifier.

Furthermore, the file read management unit 1502 uses the caller identification unit 1523 to acquire data to identify a caller from which the file read request is called (S1105). In the embodiment 1 of the present invention, an address (the return address) of the executable code of the application and the stack pointer value when the application makes the image data read request are acquired and used as data to identify the caller.

Next, the file read management unit 1502 requests the checked-application management unit 1500 to acquire the attack check result from the attack check result list 1530 (S1106). Here, the file read management unit 1502 informs the checked-application management unit 1500 of the application identifier, the content identifier, the caller address, and the stack point value.

The checked-application management unit 1500 confirms whether a check result corresponding to all the application identifier, the content identifier, the caller address, and the stack point value that are received from the file read management unit 1502 is present in the attack check result list 1530. If the check result is present, the checked-application management unit 1500 acquires the check result (S1107). Then, the checked-application management unit 1500 returns the acquired check result to the file read management unit 1502. It should be noted that if there is no check result present, the checked-application management unit 1500 informs the file read management unit 1502 of information indicating that no check result is present (S1108).

Next, the file read management unit 1502 uses the check result received from the checked-application management unit 1500 to determine whether the file may be read (S1109). If the received information indicates that the check result is "SAFE" or there is no check result present, the file read management unit 1502 determines that the check result is "READABLE". On the other hand, if the received check result is "ATTACKED", the file read management unit 1502 determines that the check result is "UNREADABLE".

If the file read management unit 1502 determines that the check result is "READABLE" in step S1109, the file read management unit 1502 determines whether there is need to check if the application from which the file read request is made is under attack (S1110). Specifically, if the check result received in step S1108 is information indicating that there is no check result present, the file read management unit 1502 determines that the check result is "REQUIRED" in step S1110. Moreover, if the received check result is "SAFE", the file read management unit 1502 determines that the check result is "NO" in step S1110.

Next, if the file read management unit 1502 determines that the check result is "REQUIRED" in step S1110, the file read management unit 1502 requests the checked-application management unit 1500 to make registration indicating that the attack check need be performed on the application (S1111). Here, the file read management unit 1502 informs the checked-application management unit 1500 of the application identifier, the content identifier, the caller address, and the stack point value.

The checked-application management unit 1500 adds to the attack check result list 1530 the application identifier, the content identifier, the caller address, and the stack point value that are received from the file read management unit 1502, and furthermore, sets a corresponding check result as "REQUIRED" (S1112).

Moreover, the file read management unit 1502 performs the file read process (S1113) if the file read management unit 1502 determines that the check result is "NO" in step S1110 and after the process in step S1112.

It should be noted that while the attack check result list 1530, the content A 1222, and the content B 1223 (all, see FIG. 3) are stored in the nonvolatile memory device 1220, the present invention is not limited thereto. The attack check result list 1530, the content A 1222, and the content B 1223 may be stored in, for example, a protected memory (not shown) inside a system LSI or a tamper-proofing nonvolatile memory device (not shown). Alternatively, immediately after being collected by the content collection application 1102, the content A 1222 and the content B 1223 may be stored in the nonvolatile memory device 1220 (see FIG. 3), checked by the attack check unit 1512, and then stored in the protected memory or the tamper-proofing nonvolatile memory device.

Moreover, when the application is updated/deleted by the management application 1105 (see FIG. 2), the checked-application management unit 1500 may delete a check result corresponding to an application identifier of the updated/deleted application from the attack check result list 1530. This allows the read process to be performed in the case where the buffer overflow vulnerability is fixed by updating the application. Moreover, in the case where the application is deleted, the attack check process can be performed again when an application having the same application identifier is re-installed.

Furthermore, when the image data is updated/deleted by the editing application 1104, the checked-application management unit 1500 may delete a check result for the content identifier of the updated/deleted image data from the attack check result list 1530. This allows detection when the image data is undesirably updated by content having a malicious program attached thereto. In contrast, this allows a picture to be displayed when the content having the malicious program attached thereto is updated to normal image data.

As described above, referring back to FIG. 9, the information processing device 100A according to the present embodiment executes one or more programs each having the application identifier which is a unique identifier.

Moreover, the information processing device 100A includes the following components: the application identification unit 1511 for identifying an application (namely, a program being executed in the information processing device 100A) by acquiring the application identifier; the caller identification unit 1523 for identifying a caller indicating a portion of the application (namely, a portion of the program) from which the function is called when the identified application calls a function (namely, the program code) such as the system call; the checked-application management unit 1500 for managing the check result which is information which includes results of the previous check for the safety of executing the identified program; and the attack check determination unit 1510 for determining, , based on the identified caller and the check result, whether a check if the identified application (program) is under attack is to be made.

Moreover, the content storage and display device 1001 further includes the attack check unit 1512 for checking if the identified application is under attack. If the attack check determination unit 1510 determines that the attack check is to be performed on the identified application, the attack check unit checks if the identified application is under attack.

Moreover, to identify the caller, the caller identification unit 1523 uses the return address which is an address in a memory and indicates a return destination used to return the execution process to the identified application after a function is called from the identified application.

Moreover, to identify the caller, the caller identification unit 1523 may use the return address and the stack pointer value of the call stack which is used by the identified application when a function is called from the identified application.

Moreover, the checked-application management unit 1500 may store, as a check result in association with the application identifier of the identified program and the caller, information which includes both (A) information indicating a result of checking if the identified program is under attack and (B) information indicating whether there is need to check to determine if the identified program is under attack,.

In this case, if the information, which is in association with the application identifier and the caller and indicates whether there is need to check if the application identified by the application identifier is under attack, is stored in the checked-application management unit 1500, the attack check determination unit 1510 determines that the check is to be made, and if the information is not stored, determines that the check is not to be made.

That is, the attack check determination unit 1510 may acquire the check result which is stored in association with the application identifier of the identified program in the checked-application management unit 1500, and may determine that the check if the identified program is under attack is not to be made if (A) the acquired check result represents that the identified program is not under attack or the identified program is under attack, and may determine that the attack check unit is to check if the identified program is under attack if (B) the acquired check result represents that there is need to check to determine if the identified program is under attack.

Still further, the information processing device 100 may include the content identification unit 1521 for identifying a data file which is about to be read by the identified application by calling a function, using the content identifier which is an identifier indicating a data file, and the readability determination unit 1520 for determining whether the identified data file is to be read.

Here, the readability determination unit 1520 may determine that the identified data file is to be read if (A) the check result in association with the content identifier, the application identifier, and the caller is not stored in the checked-application management unit 1500, or if (B) the check result in association with the content identifier, the application identifier, and the caller is stored in the checked-application management unit 1500 and the check result indicates that the identified application is not under attack, and the readability determination unit 1520 may determine that the identified data file is not to be read if (C) the check result in association with the content identifier, the application identifier, and the caller is stored in the checked-application management unit 1500 and the check result indicates that the identified application has previously been attacked.

More specifically, if the check result in association with the content identifier, the application identifier, and the caller is not stored in the checked-application management unit 1500, the readability determination unit 1520 may cause the checked-application management unit 1500 to store, in association with the content identifier, the application identifier, and the caller, information indicating that there is need to check to determine if the application identified by the application identifier is under attack.

Moreover, when the application is deleted or updated, the checked-application management unit 1500 may delete a record of the check result stored in association with the application identifier of the deleted or updated application, among check results stored as an attack check result list 1535.

Moreover, if the identified data file is modified, the checked-application management unit 1500 may delete the check result stored in association with the content identifier indicating the modified data file.

As described above, according to the embodiment 1 of the present invention, when processing the system call that is requested from the application the safety of which (that the application is not under attack) is once confirmed, the attack check process can be omitted. Furthermore, in the case where the system call involves reading a file, reading the file which has been attacked previously can be stopped. As a result, improvement of the responsiveness of the system call process is possible while maintaining the safety.

### (Embodiment 2)

In the embodiment 1 of the present invention, the file read management unit 1502 determines whether the application is to be checked, and, based on the determination result, the system call management unit 1501 performs the attack check process. In an embodiment 2, a configuration will be described in which the system call management unit 1501 determines whether the application is to be checked and performs the attack check process.

Hereinafter, the configuration of the system call management unit 1501 according to the embodiment 2 of the present invention, an attack check result list 1535, and a check need determination process will be described. It should be noted that the same reference signs are given to the same components and the same processes as those included in the embodiment 1 of the present invention and the description thereof will be omitted.

### <Configuration of Information Processing Device 100B>

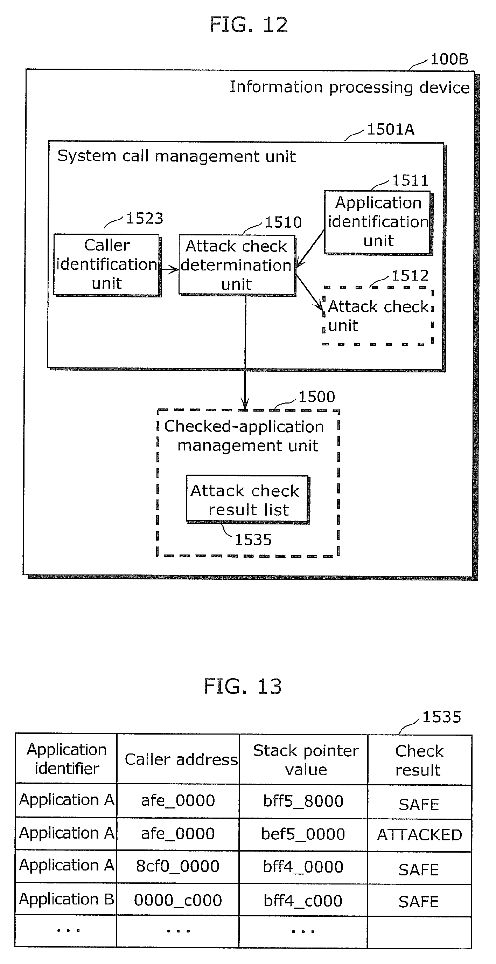

FIG. 12 is a block diagram of an information processing device 100B according to the embodiment 2 of the present invention.

In FIG. 12, a system call management unit 1501A includes the attack check determination unit 1510, the application identification unit 1511, the attack check unit 1512, and the caller identification unit 1523.

The attack check determination unit 1510 determines whether there is need to check if the application from which the system call is requested is under attack. The attack check determination unit 1510 acquires the application identifier from the application identification unit 1511, and a caller address and the stack point value from the caller identification unit 1523. The attack check determination unit 1510 confirms, via a checked-application management unit 1500, if there is data matching the specified application identifier, caller address, and stack pointer value in the attack check result list described below. If there is no matching data, the attack check determination unit 1510 uses the attack check unit 1512 to perform the attack check. On the other hand, if the matching data is present, the attack check determination unit 1510 does not perform the attack check.

FIG. 13 shows the attack check result list 1535 by way of example. The attack check result list 1535 includes the application identifier, the caller address, the stack point value, and the check result. Unlike the attack check result list 1530 and the attack check result list 1535 according to the embodiment 1 of the present invention, the check result stores only "SAFE" or "ATTACKED" indicating the check result as to whether the application is under attack.

It should be noted that the application identification unit 1511, the attack check unit 1512, and the caller identification unit 1523 are the same as those in the embodiment 1 of the present invention.

### <Check Need Determination Process>

The check need determination process according to the embodiment 2 of the present invention is the same in part as the check need determination process (FIG. 10 and FIG. 11) according to the embodiment 1 of the present invention. The following description will be focused on a different part of the check need determination process from the check need determination process according to the embodiment 1.

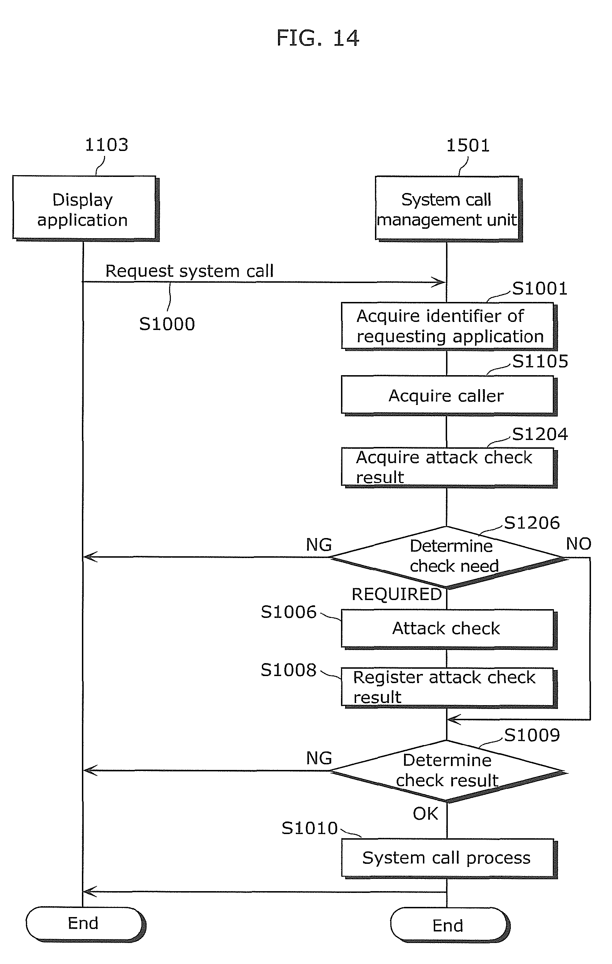

Referring to FIG. 14, the system call management unit 1501A according to the embodiment 2 of the present invention specifies the application identifier, the caller address, and the stack point value to acquire the attack check result from the checked-application management unit 1500 in the attack check result acquisition process in step S1204. Here, if the attack check result list 1535 includes a row that includes the specified application identifier, caller address, and stack point value, the checked-application management unit 1500 returns a check result ("SAFE" or "ATTACKED") included in the row. Moreover, if there is no row found matching the combination of the specified application identifiers in the attack check result list 1535, the checked-application management unit 1500 returns, as the check result, information indicating that there is no check result present, instead of "SAFE" or "ATTACKED".

Then, if the check result received in the check need determination in step S1206 is the information indicating that there is no check result present, the checked-application management unit 1500 determines that the check result is "REQUIRED". Moreover, if the check result is "SAFE", the checked-application management unit 1500 determines that the check result is "NO". Moreover, if the check result is "ATTACKED", the checked-application management unit 1500 determines that the check result is "NG".

Next, if it is determined that the check result is "REQUIRED" in step S1206, the system call management unit 1501A performs the attack check process (S1006) and an attack check process result registration process (S1108). Furthermore, the system call management unit 1501A performs the check result determination process (S1009).

Moreover, if it is determined that the check result is "NO" in step S1206, the system call management unit 1501A performs the determination process (S1009) in succession.

Moreover, if it is determined that the check result is "NG" in step S1206, the system call management unit 1501A returns error to the display application 1103 from which the system call is called.

As described above, according to the embodiment 2 of the present invention, the check need determination process is performed upon the system call request from the application, and thereby improvement of the responsiveness of the system call process is possible.

### (Embodiment 3)

Unlike the information processing device 100B according to the embodiment 2 of the present invention, an information processing device according to an embodiment 3 of the present invention does not generate or manage the attack check result list 1530 in the own device and acquires the attack check result list 1530 from other device.

Hereinafter, an information processing device 100C according to the embodiment 3 of the present invention will be described in detail. It should be noted that the same reference signs are given to the same components and the same processes as those included in the information processing device 100B according to the embodiment 2 of the present invention and the description thereof will be omitted.

### <Configuration of Content Storage and Display System 1000A>

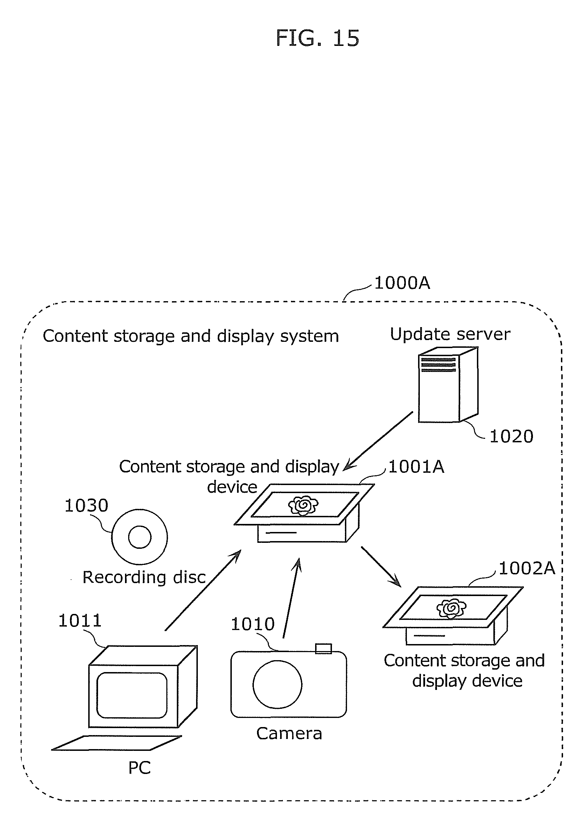

FIG. 15 is a block diagram of a content storage and display system 1000A according to the embodiment 3 of the present invention.

In FIG. 15, the content storage and display system 1000A includes content storage and display devices 1001A and 1002A, the camera 1010, the PC 1011, and the update server 1020.

The content storage and display device 1001A is connected to the content storage and display device 1002A via a network.

To share the image data between the content storage and display device 1001A and the content storage and display device 1002A, the content storage and display device 1001A sends the image data stored in the own device to the content storage and display device 1002A. Here, the content storage and display device 1001A sends the attack check result list 1535 together with the image data.

The content storage and display device 1002A is connected to the content storage and display device 1001A via a network. When displaying the image data received from the content storage and display device 1001A, the content storage and display device 1002A refers to the attack check result list 1535 received from the content storage and display device 1001A and displays image data the check result of which is "SAFE" only.

The content storage and display device 1001A and the content storage and display device 1002A are the same as the content storage and display device 1001 according to the embodiment 1 of the present invention except for the functionality described above.

It should be noted that the content storage and display devices 1001A and 1002A, the camera 1010, the PC 1011, and the update server 1020 are the same as those according to the embodiments 1 and 2 of the present invention.

### <Configuration of Information Processing Device 100C>

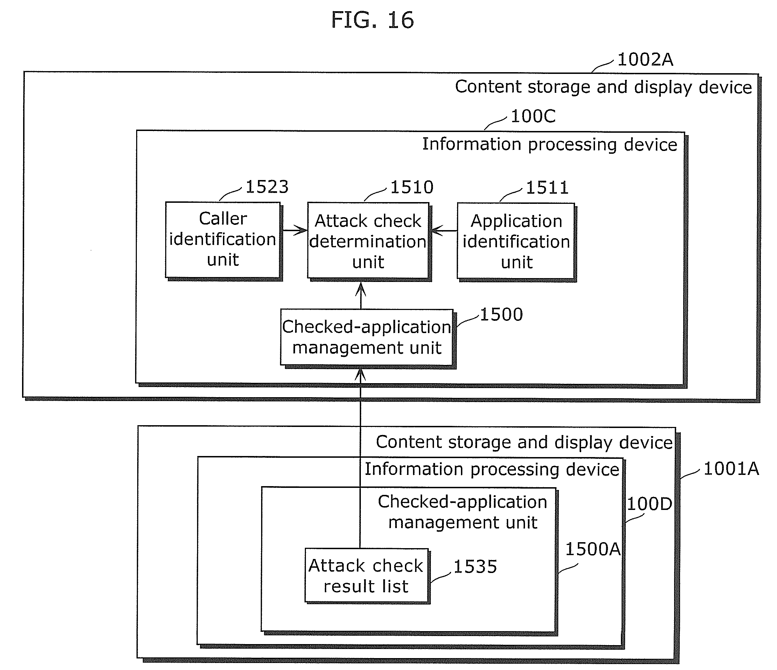

FIG. 16 shows block diagrams of the content storage and display device 1001A according to the embodiment 3 of the present invention and the information processing device 100C included in the content storage and display device 1002A.

In FIG. 16, the information processing device 100C included in the content storage and display device 1002A has the attack check determination unit 1510, the application identification unit 1511, and the caller identification unit 1523. Moreover, an information processing device 100D included in the content storage and display device 1001A has a checked-application management unit 1500A and the attack check result list 1535.

It should be noted that detailed description of components of the content storage and display device 1001A and the content storage and display device 1002A which are the same as those of the embodiment 2 will be omitted.

The attack check determination unit 1510 determines whether there is need to check if the application from which the system call is requested is under attack. The attack check determination unit 1510 acquires the application identifier from the application identification unit 1511, and the caller address and the stack point value from the caller identification unit 1523. The attack check determination unit 1510 acquires, via the checked-application management unit 1500, the attack check result list 1535 included in the checked-application management unit 1500A. The attack check determination unit 1510 then determines whether there is data (a row) matching all the application identifier, caller address, and stack point value in the acquired attack check result list 1535.

If there is the matching data, the system call process is performed when a check result of the matching data is "SAFE", and the system call process is not performed when the check result is "ATTACKED".

That is, the checked-application management unit 1500 included in the information processing device 100C according to the embodiment 3 of the present invention may store the check result in the information processing device 100D different from an information processing device C that has the checked-application management unit 1500. Moreover, the checked-application management unit 1500 may store the check result in at least one of the information processing device 100C, which includes the checked-application management unit 1500, and the information processing device 100D different from the information processing device 100C which includes the checked-application management unit.

It should be noted that processes performed by the application identification unit 1511 and the caller identification unit 1523 are the same as those performed by the application identification unit 1511 and the caller identification unit 1523 according to the embodiment 2 of the present invention, respectively.

### <Check Need Determination Process>

A check need determination process performed by the information processing device 100C included in the content storage and display device 1002A according to the embodiment 3 of the present invention is for the most part the same process as the check need determination process (FIG. 14) according to the embodiment 2 of the present invention. Thus, referring to FIG. 17, the following description will be focused on a different part of the check need determination process from the check need determination process according to the embodiment 2 of the present invention. It should be noted that processes performed by the information processing device 100D included in the content storage and display device 1001A according to the present embodiment are the same as those described in the embodiment 2, and thus the description thereof will be omitted.

Referring to FIG. 17, the information processing device 100C included in the content storage and display device 1002A according to the present embodiment specifies the application identifier, the caller address, and the stack point value in the attack check result acquisition process. Moreover, the information processing device 100C acquires a check result matching the specified application identifiers from the checked-application management unit 1500A included in the information processing device 100D which is connected to the content storage and display device 1002A in a network via the information processing device 100C (S1204).

Here, the checked-application management unit 1500A included in the content storage and display device 1001A refers to the attack check result list 1535. As a result, the checked-application management unit 1500A returns, as a check result, "SAFE" or "ATTACKED", for example. Moreover, if there is no row found matching the combination of the specified application identifiers in the attack check result list 1535, the checked-application management unit 1500A returns, as the check result, information indicating that, for example, "there is no check result present", instead of "SAFE" or "ATTACKED".

If the received check result is "SAFE" at the subsequent check result determination process, the attack check determination unit 1510 determines that the check result is "OK" in step S1009. Moreover, if the check result is "ATTACKED" or "there is no check result present", the attack check determination unit 1510 determines that the check result is "NG" in step S1009 (S1009).

If it is determined that the check result is "OK" in step S1009, the information processing device 100C performs the system call process (S1010). On the other hand, if it is determined that the check result is "NG" in step S1009, the information processing device 100C returns error to the application from which the system call is called.

It should be noted that while the information processing device 100C included in the content storage and display device 1002A according to the present embodiment may not perform the attack check process, the present invention is not limited thereto. A combination may be possible such that, for example, when the image data independently collected by the content storage and display device 1002A is read, the information processing device 100C included in the content storage and display device 1002A performs the attack check process as with the embodiments 1 and 2 of the present invention, and, on the other hand, does not perform the attack check process for the image data that is received from the content storage and display device 1001A.

It should be noted that in the embodiment 3 of the present invention, the case is described where the image data is shared between, but not limited to, two devices: the content storage and display device 1001A; and the content storage and display device 1002A. For example, the content and the attack check result list may be shared between two or more of the content storage and display devices. More specifically, the content storage and display device 1002A may further share the image data with a third content storage and display device other than the content storage and display device 1001A. Here, the content storage and display device 1002A may combine the attack check result list 1535 acquired from the content storage and display device 1001A and the attack check result list acquired from the third content storage and display device to use and manage as a attack check result list.

It should be noted that the information processing device 100C included in the content storage and display device 1002A may not necessarily acquire the attack check result list 1535 for each issue of the system call in step S1204. For example, the information processing device 100C may acquire the attack check result list 1535 at the same timing when the content storage and display device 1002A receives content, such as an image, from the content storage and display device 1001A.

Moreover, in the embodiments 1 to 3, the specific example of the device having the information processing device is described using the content storage and display device. However, a device to which the information processing device according to the present invention is applied is not limited to the content storage and display device. For example, the information processing device according to the present invention may be applied to a content display device which does not store content to be displayed and temporarily acquires and displays such content from an external storage.

As described above, according to the embodiment 3 of the present invention, by (A) receiving the attack check result list 1535 at the same time when receiving the image data from other device (for example, the content storage and display device 1001A) or (B) receiving the attack check result list 1535 for each issue of the system call from other device (for example, the content storage and display device 1001A), the content storage and display device 1002A itself may not perform the attack check process. As a result, significant improvement of the responsiveness of the system call process is possible.

It should be noted that the present invention is, of course, not limited by the embodiments 1 to 3. The following cases are also included in the scope of the present invention.
(1) The content identifier in the above-described embodiments is, but not limited to, the file name of the image data file. For example, the file name may be a combination of the file name and a file size, or may be a hash value of the image data or an identifier embedded in the image data.
   Moreover, the image data may not be a file and a plurality of images may be included in a file like database.
(2) The expression "the application is under attack" in the embodiments 1 to 3 refers, but not limited, to the state in which the buffer overflow vulnerability present in the application is being attacked and the malicious program is running on the stack of the application. For example, the expression may refer to a state in which a code region of the application is tampered. In this case, a process of detecting the tamper of the code region of an application on a memory 1210 is performed as the attack check process.
(3) The attack check process in the embodiments 1 to 3 is, but not limited to, the process for checking if the return address is an address of a stack area. For example, a special value called "canary" may be inserted between the local variable area and the return address of the stack, and a value of the "canary" may be checked at the end of function.
   Moreover, in the embodiment 3, the description is set forth that the combination may be possible such that when the image data independently collected by the content storage and display device 1002A is read, the information processing device 100C may perform the attack check process as with the embodiments 1 and 2 of the present invention, and even in this case, the information processing device 100C may not perform the attack check process on the image data received from the content storage and display device 1001A. Here, when reading the image data independently collected by the content storage and display device 1002A, the information processing device 100C may use an application in which the "canary" value is checked, and when reading the image data received from the content storage and display device 1001A, the information processing device 100C may use an application in which the "canary" value is not checked.
(4) In the embodiments 1 to 3, the attack check process is performed, but not limited, at the system call request and prior to the system call process. For example, the attack check process may be performed in parallel with the system call process. Moreover, the information processing device may merely request the attack check process and the actual process may be performed in the background while the application is running.
(5) The check need determination processes or the file read processes in the embodiments 1 to 3 start, but not limited, at a moment when a user has selected image data. For example, the attack check result lists 1530 and 1535 may be created prior to the user displaying the images, by performing the read process in the background when the device is not in use by the user such as a sleep mode or immediately after the image data is loaded.
(6) The devices described above are, specifically, a computer system which includes a microprocessor, a ROM (Read Only Memory), a RAM, a hard disk unit, a display unit, a keyboard, a mouse, and the like. A computer program is stored in the RAM or the hard disc unit. By the microprocessor operating in accordance with the computer program, each device achieves its functionality. Here, the computer program is, to achieve predetermined functionality, configured with a plurality of instruction code indicating instructions to the computer.
(7) A part or the whole of the components included in each device described above may be configured with one system LSI (Large Scale Integration). The system LSI a super multi-function LSI manufactured by integrating a plurality of components on one chip, and is, specifically, a computer system which includes the microprocessor, ROM, RAM, or the like. The computer program is stored in the RAM. The system LSI achieves its functionality by the microprocessor operating in accordance with the computer program.
   Moreover, the components included in each device may separately be mounted on one chip, or a part or the whole of the components may be mounted on one chip.
   Moreover, here, the term system LSI is used. However, IC, LSI, super LSI, ultra LSI may be used depending on the difference in degree of integration. Moreover, the circuit integration is not limited to the LSI and may be implemented as a dedicated circuit or a general-purpose processor. An FPGA (Field Programmable Gate Array) which is programmable after manufacturing the LSI, or a reconfigurable processor in which connection or settings of circuit cells in LSI is reconfigurable, may be used.
   Furthermore, if circuit integration technology emerges replacing the LSI due to advance in semiconductor technology or other technology derived therefrom, the functional blocks may, of course, be integrated using the technology. Application of biotechnology is possible.
(8) Part or the whole of the components included in each device described above may be configured with an IC card or a single module detachable to each device. The IC card or the module is a computer system which includes the microprocessor, ROM, RAM, or the like. The IC card or the module may include the super multi-function LSI described above. The IC card or the module achieves its functionality by the microprocessor operating in accordance with the computer program. The IC card or the module may be of tamper-resistant.
(9) The present invention may be the methods described above. Moreover, the present invention may be a computer program implementing such methods via a computer, or digital signals including the computer program.
   Moreover, the present invention may be a computer-readable recording medium having recorded therein the computer program or the digital signals, such as a flexible disk, a hard disk, CD-ROM, MO, DVD, DVD-ROM, DVD-RAM, BD (Blu-ray (registered trademark) Disc), and a semiconductor memory. Moreover, the present invention may be the digital signals recorded in such recording mediums.
   Moreover, the present invention may be the computer program or the digital signals transmitted via an electric communication line, a wireless or wired communication line, a network represented by the Internet, data broadcast or the like.
   Moreover, the present invention may be a computer system which includes a microprocessor and a memory, the memory may store therein the computer program, and the microprocessor may operate in accordance with the computer program.
   Moreover, by transferring the program or the digital signals stored in the recording medium, or transferring the program or the digital signals via the network or the like, the program or the digital signals may be executed in other independent computer system.
(10) The above-described embodiments and modification may be combined.

### [Industrial Applicability]

The present invention is applicable to information processing devices which allow preventing the leakage of information, and the like.

### [Reference Signs List]

100, 100A, 100B, 100C, 100D Information processing device
101 Task
102 Data region
103 System call table
104 Validation unit
105 System call
106 Instruction execution unit
107, 1101 OS
112 Attack countermeasure unit
1000, 1000A Content storage and display system
1001, 1001A, 1002A Content storage and display device
1010 Camera
1011 PC
1020 Update server
1030 Recording disc
1102 Content collection application
1103 Display application
1104 Editing application
1105 Management application
1200 System LSI
1201 CPU
1202 Card I/F
1203 Network I/F
1204 Input and output I/F
1210 Memory
1220 Nonvolatile memory device
1221 Caller check result table
1222 Content A
1223 Content B
1300 Update process reception unit
1301 Update software store unit
1500, 1500A Checked-application management unit
1501, 1501A System call management unit
1502 File read management unit
1510 Attack check determination unit
1511, 1522 Application identification unit
1512 Attack check unit
1520 Readability determination unit
1521 Content identification unit
1523 Caller identification unit
1530, 1535 Attack check result list
1531 Check-necessary application list
1560 main function
1561 get thumbnail function
1562 get data body function
1563 read function

## Claims

1. An information processing device (100) for executing one or more programs each having an application identifier which is a unique identifier, the information processing device comprising:
an application identification unit (1511) configured to identify a program being executed in the information processing device, by acquiring the application identifier;
a caller identification unit r (1523) configured to identify a caller indicating a portion of the program from which a program code is called when the identified program calls the program code, using a stack pointer value of a call stack which is used by the identified program when the program code is called from the identified program, and a return address which is an address in a memory and indicates a return destination used to return an execution process to the identified program after the program code is called from the identified program;
a checked-application management unit (1500) configured to manage a check result in association with the identified caller, the check result being information including a result of previous check for safety of executing the identified program; and
an attack check determination unit (1510) configured to acquire the check result stored in association with the application identifier of the identified program in the checked-application management unit, to determine that a check as to if the identified program is under attack is not to be made when the result of the previous check of the check result associated with the identified caller represents that the identified program has not previously been under attack or the identified program has previously been under attack.

2. The information processing device according to Claim 1, further comprising
an attack check unit configured to check if the identified program is under attack,
wherein when the attack check determination unit determines that an attack check is to be performed on the identified program, the attack check unit is configured to check if the identified program is under attack,
the checked-application management unit is configured to update the check result with a result of check by the attack check unit as to if the identified program is under attack, and
the attack check determination unit is configured to acquire the updated check result to determine, using a result of previous check by the attack check unit as to if the identified program has been under attack, whether a check if the identified program is under attack is to be made.

3. The information processing device according to Claim 1,
wherein the checked-application management unit is configured to store, as the check result in association with the application identifier of the identified program and the caller, information including both (A) information indicating a result of checking if the identified program is under attack and (B) information indicating whether there is need to check to determine if the identified program is under attack.

4. The information processing device according to Claim 3,
wherein the attack check determination unit is further configured to determine that the attack check unit is to check if the identified program is under attack, when the acquired check result represents that there is need to check to determine if the identified program is under attack.

5. The information processing device according to Claim 3, further comprising:
a content identification unit configured to identify a data file which is about to be read by the identified program by calling the program code, using a content identifier which is an identifier indicating the data file; and
a readability determination unit configured to determine whether the identified data file is to be read,
wherein the readability determination unit is configured to:
determine that the identified data file is to be read, when (A) the check result in association with the content identifier, the application identifier, and the caller is not stored in the checked-application management unit, or when (B) the check result in association with the content identifier, the application identifier, and the caller is stored in the checked-application management unit and the check result indicates that the identified program is not under attack; and
determine that the identified data file is not to be read, when (C) the check result in association with the content identifier, the application identifier, and the caller is stored in the checked-application management unit and the check result indicates that the identified program has previously been attacked.

6. The information processing device according to Claim 5,
wherein when the check result in association with the content identifier, the application identifier, and the caller is not stored in the checked-application management unit, the readability determination unit is configured to cause the checked-application management unit to store, in association with the content identifier, the application identifier, and the caller, information indicating that there is need to check to determine if a program identified by the application identifier is under attack.

7. The information processing device according to Claim 3,
wherein when the program is deleted or updated, the checked-application management unit is configured to delete a check result that is stored in association with an application identifier of the deleted or updated program.

8. The information processing device according to Claim 1,
wherein the checked-application management unit is configured to store the check result in at least one of the information processing device including the checked-application management unit and an information processing device different from the information processing device including the checked-application management unit.

9. The information processing device according to Claim 5,
wherein when the identified data file is modified, the checked-application management unit is configured to delete a check result stored in association with a content identifier indicating the modified data file.

10. An information processing method for executing one or more programs each having an application identifier which is a unique identifier, the information processing method comprising:
identifying a program being executed by the information processing method, by acquiring (S1103, S1001) the application
identifier;
identifying (S1105) a caller indicating a portion of the program from which a program code is called when the identified program calls the program code, using a stack pointer value of a call stack which is used by the identified program when the program code is called from the identified program, and a return address which is an address in a memory and indicates a return destination used to return an execution process to the identified program after the program code is called from the identified program;
managing a check result in association with the identified caller, the check result being information including a result of previous check for safety of executing the identified program; and
acquiring (S1107,S1204) the check result stored in association with the application identifier of the identified program in the checked-application management unit, to determine (S1110,S1206) that a
check as to if the identified program is under attack is not to be made when the result of the previous check of the check result associated with the identified caller represents that the identified program has not previously been under attack or the identified program has previously been under attack.

11. A program for causing a computer to execute the information processing method according to Claim 10.

12. A computer-readable recording medium having stored therein the program according to Claim 11.

13. An integrated circuit for executing one or more programs each having an application identifier which is a unique identifier, the integrated circuit comprising an information processing device according to claim 1.

## Patentansprüche

1. Informationsverarbeitungsvorrichtung (100) für die Ausführung von einem oder mehreren Programmen, wobei jedes einen Anwendungsbezeichner hat, der ein einziger Bezeichner ist, und die Informationsverarbeitungsvorrichtung folgendes umfasst:
Anwendungsidentifikationseinheit (1511), die so konfiguriert ist, dass sie ein in der Informationsverarbeitungsvorrichtung ausgeführtes Programm durch Laden des Anwendungsbezeichners identifiziert;
Rufnummernanzeigeeinheit (1523), die so konfiguriert ist, dass sie eine Rufnummer anzeigt, indem sie einen Anteil des Programms angibt, von dem aus ein Programmcode aufgerufen wird, wenn das identifizierte Programm den Programmcode aufruft unter Benutzung eines Stapelzeigerwerts, der vom identifizierten Programm benutzt wird, wenn der Programmcode vom identifizierten Programm aufgerufen wird, und eine Absenderadresse, die eine Adresse in einem Speicher ist und einen Absender angibt, die benutzt wird, um eine Ausführungsverarbeitung an das identifizierte Programm zurück zu schicken, nachdem der Programmcode vom identifizierten Programm aufgerufen wird;
Verwaltungseinheit für geprüfte Anwendungen (1500), die so konfiguriert ist, dass sie ein Prüfungsergebnis in Verbindung mit der angezeigten Rufnummer verwaltet, und das Prüfungsergebnis Daten sind, die ein Ergebnis einer vorherigen Prüfung der Sicherheit der Ausführung des identifizierten Programms umfassen; und
Angriffsprüfungs-Bestimmungseinheit (1510), die so konfiguriert ist, dass sie das in Verbindung mit dem Anwendungsbezeichner des identifizierten Programms in der Verwaltungseinheit für geprüfte Anwendungen gespeicherte Prüfungsergebnis lädt, um zu bestimmen, ob eine Prüfung dessen, ob das identifizierte Programm angegriffen wird, nicht durchgeführt wird, wenn das Ergebnis der vorherigen Prüfung des Prüfungsergebnisses in Verbindung mit der angezeigten Rufnummer darstellt, dass das identifizierte Programm nicht vorher angegriffen wurde, oder dass das identifizierte Programm vorher angegriffen wurde.

2. Informationsverarbeitungsvorrichtung nach Anspruch 1, die ferner umfasst
Angriffsprüfungseinheit, die so konfiguriert ist, dass sie prüft, ob das identifizierte Programm angegriffen wird,
wobei die Angriffsprüfungs-Bestimmungseinheit bestimmt, dass eine Angriffsprüfung am identifizierten Programm durchgeführt werden muss und die Angriffsprüfungseinheit so konfiguriert ist, dass sie prüft, ob das identifizierte Programm angegriffen wird,
die Verwaltungseinheit für geprüfte Anwendungen so konfiguriert ist, dass sie das Prüfungsergebnis mit einem Ergebnis der Prüfung durch die Angriffsprüfungseinheit dahingehend aktualisiert, ob das identifizierte Programm angegriffen wird, und
die Angriffsprüfungs-Bestimmungseinheit so konfiguriert ist, dass sie das aktualisierte Prüfungsergebnis lädt, um unter Benutzung eines Ergebnisses einer vorherigen Prüfung durch die Angriffsprüfungseinheit dahingehend, ob das identifizierte Programm angegriffen worden ist, zu bestimmen, ob eine Prüfung des identifizierten angegriffenen Programms durchgeführt werden soll.

3. Informationsverarbeitungsvorrichtung nach Anspruch 1, wobei die Verwaltungseinheit für geprüfte Anwendungen so konfiguriert ist, dass sie als Prüfungsergebnis in Verbindung mit dem Anwendungsbezeichner des identifizierten Programms und der Rufnummer die Daten speichert, die sowohl (A) Daten umfassen, die ein Ergebnis der Prüfung angeben, ob das identifizierte Programm angegriffen wird, als auch (B) Daten, die angeben, ob ein Bedarf an einer Prüfung besteht, um zu bestimmen, ob das identifizierte Programm angegriffen wird.

4. Informationsverarbeitungsvorrichtung nach Anspruch 3,
wobei die Angriffsprüfungs-Bestimmungseinheit ferner so konfiguriert ist, dass sie bestimmt, dass die Angriffsprüfungseinheit prüfen soll, ob das identifizierte Programm angegriffen wird, wenn das geladene Prüfungsergebnis darstellt, dass ein Bedarf an einer Prüfung besteht, um zu bestimmen, ob das identifizierte Programm angegriffen wird.

5. Informationsverarbeitungsvorrichtung nach Anspruch 3, die ferner umfasst:
Inhaltsanzeigeeinheit, die so konfiguriert ist, dass sie eine Datendatei identifiziert, die gerade vom identifizierten Programm gelesen werden soll, und zwar durch Aufruf des Programmcodes unter Benutzung eines Inhaltsbezeichners, der ein Bezeichner ist, der die Datendatei angibt; und
Lesbarkeitsbestimmungseinheit, die so konfiguriert ist, dass sie bestimmt, ob die identifizierte Datendatei gelesen werden soll,
wobei die Lesbarkeitsbestimmungseinheit so konfiguriert ist, dass sie:
bestimmt, dass die identifizierte Datendatei gelesen werden soll, wenn (A) das Prüfungsergebnis in Verbindung mit dem Inhaltsbezeichner, dem Anwendungsbezeichner und der Rufnummer nicht in der Verwaltungseinheit für geprüfte Anwendungen gespeichert ist, oder wenn (B) das Prüfungsergebnis in Verbindung mit dem Inhaltsbezeichner, dem Anwendungsbezeichner und der Rufnummer in der Verwaltungseinheit für geprüfte Anwendungen gespeichert ist und das Prüfungsergebnis angibt, dass das identifizierte Programm nicht angegriffen wird; und
bestimmt, dass die identifizierte Datendatei nicht gelesen werden soll, wenn (C) das Prüfungsergebnis in Verbindung mit dem Inhaltsbezeichner, dem Anwendungsbezeichner und der Rufnummer in der Verwaltungseinheit für geprüfte Anwendungen gespeichert ist und das Prüfungsergebnis angibt, dass das identifizierte Programm vorher angegriffen worden ist.

6. Informationsverarbeitungsvorrichtung nach Anspruch 5,
wobei das Prüfungsergebnis in Verbindung mit dem Inhaltsbezeichner, dem Anwendungsbezeichner und der Rufnummer nicht in der Verwaltungseinheit für geprüfte Anwendungen gespeichert ist, die Lesbarkeitsbestimmungseinheit so konfiguriert ist, dass sie bei der Verwaltungseinheit für geprüfte Anwendungen dafür sorgt, dass sie in Verbindungindung mit dem Inhaltsbezeichner, dem Anwendungsbezeichner und der Rufnummer Daten speichert, die angeben, ob ein Bedarf an einer Prüfung besteht, um zu bestimmen, ob ein vom Anwendungsbezeichner identifiziertes Programm angegriffen wird.

7. Informationsverarbeitungsvorrichtung nach Anspruch 3,
wobei, wenn das Programm gelöscht oder aktualisiert wird, die Verwaltungseinheit für geprüfte Anwendungen so konfiguriert ist, dass sie ein Prüfungsergebnis löscht, das in Verbindung mit einem Anwendungsbezeichner des gelöschten oder aktualisierten Programms gespeichert ist.

8. Informationsverarbeitungsvorrichtung nach Anspruch 1,
wobei die Verwaltungseinheit für geprüfte Anwendungen so konfiguriert ist, dass sie das Prüfungsergebnis in mindestens einer der Informationsverarbeitungsvorrichtungen speichert einschließlich der Verwaltungseinheit für geprüfte Anwendungen und einer Informationsverarbeitungsvorrichtung, die sich von der Informationsverarbeitungsvorrichtung unterscheidet, die die Verwaltungseinheit für geprüfte Anwendungen umfasst.

9. Informationsverarbeitungsvorrichtung nach Anspruch 5,
wobei, wenn die identifizierte Datendatei geändert wird, die Verwaltungseinheit für geprüfte Anwendungen so konfiguriert ist, dass sie ein Prüfungsergebnis löscht, das in Verbindung mit einem Inhaltsbezeichner mit Angabe der geänderten Datendatei gespeichert ist.

10. Informationsverarbeitungsverfahren für die Ausführung eines oder mehrerer Programme, von denen jedes einen Anwendungsbezeichner hat, der ein einziger Bezeichner ist, und das Informationsverarbeitungsverfahren folgendes umfasst:
Identifizierung eines Programms, das gerade vom Informationsverarbeitungsverfahren ausgeführt wird, durch Laden (S1103, S1001) des Anwendungsbezeichners;
Identifizierung (S1105) einer Rufnummer mit Angabe eines Anteils des Programms, von dem aus ein Programmcode aufgerufen wird, wenn das identifizierte Programm den Programmcode aufruft unter Benutzung eines Stapelzeigerwerts eines Nummernstapels, der vom identifizierten Programm benutzt wird, wenn der Programmcode vom identifizierten Programm aufgerufen wird, und einer Absenderadresse, die eine Adresse in einem Speicher ist und einen Absender angibt, die benutzt wird, um eine Ausführungsverarbeitung an das identifizierte Programm zurück zu schicken, nachdem der Programmcode vom identifizierten Programm aufgerufen wird;
Verwaltung eines Prüfungsergebnisses in Verbindung mit der identifizierten Rufnummer, wobei das Prüfungsergebnis Daten sind, die ein Ergebnis einer vorherigen Prüfung der Sicherheit bei der Ausführung des identifizierten Programms sind; und
Laden (S1107, S1204) des Prüfungsergebnisses, das in Verbindung mit dem Anwendungsbezeichner des identifizierten Programms in der Verwaltungseinheit für geprüfte Anwendungen gespeichert ist, um zu bestimmen (S1110, S1206), dass eine Prüfung dessen, ob das identifizierte Programm angegriffen wird, nicht vorgenommen werden soll, wenn das Ergebnis der vorherigen Prüfung des Prüfungsergebnisses in Verbindung mit der angezeigten Rufnummer darstellt, dass das identifizierte Programm vorher nicht angegriffen worden ist, oder dass das identifizierte Programm vorher angegriffen worden ist.

11. Programm, das einen Rechner dazu veranlasst, das Informationsverarbeitungsverfahren nach Anspruch 10 durchzuführen.

12. Rechnerlesbares Aufzeichnungsmedium, auf dem das Programm nach Anspruch 11 gespeichert ist.

13. Integrierter Schaltkreis für die Ausführung eines oder mehrerer Programme, von denen jedes einen Anwendungsbezeichner hat, der ein einziger Bezeichner ist, und der integrierte Schaltkreis eine Informationsverarbeitungsvorrichtung nach Anspruch 1 umfasst.

## Revendications

1. Dispositif de traitement d'informations (100) pour exécuter un ou plusieurs programmes ayant chacun un identificateur d'application qui est un identificateur unique, le dispositif de traitement d'informations comprenant :
une unité d'identification d'application (1511) configurée pour identifier un programme qui est exécuté dans le dispositif de traitement d'informations, en acquérant l'identificateur d'application ;
une unité d'identification d'appelant (1523) configurée pour identifier un appelant en indiquant une partie du programme à partir duquel un code de programme est appelé lorsque le programme identifié appelle le code de programme, en utilisant une valeur de pointeur de pile d'une pile d'appels qui est utilisée par le programme identifié lorsque le code de programme est appelé à partir du programme identifié, et une adresse de retour qui est une adresse dans une mémoire et indique une destination de retour utilisée pour retourner un processus d'exécution au programme identifié après que le code de programme est appelé à partir du programme identifié ;
une unité de gestion d'application vérifiée (1500) configurée pour gérer un résultat de vérification en association avec l'appelant identifié, le résultat de vérification étant des informations incluant un résultat de vérification précédente pour la sécurité d'exécution du programme identifié ; et
une unité de détermination de vérification d'attaque (1510) configurée pour acquérir le résultat de vérification stocké en association avec l'identificateur d'application du programme identifié dans l'unité de gestion d'application vérifiée, pour déterminer qu'une vérification quant à si le programme identifié est soumis à une attaque ne doit pas être effectuée lorsque le résultat de la vérification précédente du résultat de vérification associé à l'appelant identifié représente que le programme identifié n'a pas été précédemment soumis à une attaque ou que le programme identifié a été précédemment soumis à une attaque.

2. Dispositif de traitement d'informations selon la revendication 1, comprenant en outre
une unité de vérification d'attaque configurée pour vérifier si le programme identifié est soumis à une attaque,
dans lequel lorsque l'unité de détermination de vérification d'attaque détermine qu'une vérification d'attaque doit être effectuée sur le programme identifié, l'unité de vérification d'attaque est configurée pour vérifier si le programme identifié est soumis à une attaque,
l'unité de gestion d'application vérifiée est configurée pour mettre à jour le résultat de vérification avec un résultat de vérification par l'unité de vérification d'attaque quant à si le programme identifié est soumis à une attaque, et
l'unité de détermination de vérification d'attaque est configurée pour acquérir le résultat de vérification mis à jour pour déterminer, en utilisant un résultat de vérification précédente par l'unité de vérification d'attaque quant à si le programme identifié a été soumis à une attaque, si une vérification si le programme identifié est soumis à une attaque doit être effectuée.

3. Dispositif de traitement d'informations selon la revendication 1,
dans lequel l'unité de gestion d'application vérifiée est configurée pour stocker, comme le résultat de vérification en association avec l'identificateur d'application du programme identifié et l'appelant, des informations incluant à la fois (A) des informations indiquant un résultat de vérification de si le programme identifié est soumis à une attaque et (B) des informations indiquant s'il est nécessaire de vérifier pour déterminer si le programme identifié est soumis à une attaque.

4. Dispositif de traitement d'informations selon la revendication 3,
dans lequel l'unité de détermination de vérification d'attaque est en outre configurée pour déterminer que l'unité de vérification d'attaque doit vérifier si le programme identifié est soumis à une attaque, lorsque le résultat de vérification acquis représente qu'il n'est pas nécessaire de vérifier pour déterminer si le programme identifié est soumis à une attaque.

5. Dispositif de traitement d'informations selon la revendication 3, comprenant en outre :
une unité d'identification de contenu configurée pour identifier un fichier de données qui est sur le point d'être lu par le programme identifié en appelant le code de programme, en utilisant un identificateur de contenu qui est un identificateur indiquant le fichier de données ; et
une unité de détermination de lisibilité configurée pour déterminer si le fichier de données identifié doit être lu,
dans lequel l'unité de détermination de lisibilité est configurée pour :
déterminer que le fichier de données identifié doit être lu, lorsque (A) le résultat de vérification en association avec l'identificateur de contenu, l'identificateur d'application, et l'appelant n'est pas stocké dans l'unité de gestion d'application vérifiée, ou lorsque (B) le résultat de vérification en association avec l'identificateur de contenu, l'identificateur d'application, et l'appelant est stocké dans l'unité de gestion d'application vérifiée et le résultat de vérification indique que le programme identifié n'est pas soumis à une attaque ; et
déterminer que le fichier de données identifié ne doit pas être lu, lorsque (C) le résultat de vérification en association avec l'identificateur de contenu, l'identificateur d'application, et l'appelant est stocké dans l'unité de gestion d'application vérifiée et le résultat de vérification indique que le programme identifié a précédemment été attaqué.

6. Dispositif de traitement d'informations selon la revendication 5,
dans lequel lorsque le résultat de vérification en association avec l'identificateur de contenu, l'identificateur d' application, et l'appelant n'est pas stocké dans l'unité de gestion d'application vérifiée, l'unité de détermination de lisibilité est configurée pour amener l'unité de gestion d'application vérifiée à stocker, en association avec l'identificateur de contenu, l'identificateur d'application, et l'appelant, des informations indiquant qu'il est nécessaire de vérifier pour déterminer si un programme identifié par l'identificateur d'application est soumis à une attaque.

7. Dispositif de traitement d'informations selon la revendication 3,
dans lequel lorsque le programme est supprimé ou mis à jour, l'unité de gestion d'application vérifiée est configurée pour supprimer un résultat de vérification qui est stocké en association avec un identificateur d'application du programme supprimé ou mis à jour.

8. Dispositif de traitement d'informations selon la revendication 1,
dans lequel l'unité de gestion d'application vérifiée est configurée pour stocker le résultat de vérification dans au moins un du dispositif de traitement d'informations incluant l'unité de gestion d'application vérifiée et d'un dispositif de traitement d'informations différent du dispositif de traitement d'informations incluant l'unité de gestion d'application vérifiée.

9. Dispositif de traitement d'informations selon la revendication 5,
dans lequel lorsque le fichier de données identifié est modifié, l'unité de gestion d'application vérifiée est configurée pour supprimer un résultat de vérification stocké en association avec un identificateur de contenu indiquant le fichier de données modifié.

10. Procédé de traitement d'informations pour exécuter un ou plusieurs programmes ayant chacun un identificateur d'application qui est un identificateur unique, le procédé de traitement d'informations comprenant :
l'identification d'un programme qui est exécuté par le procédé de traitement d'informations, en acquérant (S1103, S1001) l'identificateur d'application ;
l'identification (S1105) d'un appelant en indiquant une partie du programme à partir duquel un code de programme est appelé lorsque le programme identifié appelle le code de programme, en utilisant une valeur de pointeur de pile d'une pile d'appels qui est utilisée par le programme identifié lorsque le code de programme est appelé à partir du programme identifié, et une adresse de retour qui est une adresse dans une mémoire et indique une destination de retour utilisée pour retourner un processus d'exécution au programme identifié après que le code de programme est appelé à partir du programme identifié ;
la gestion d'un résultat de vérification en association avec l'appelant identifié, le résultat de vérification étant des informations incluant un résultat de vérification précédente pour la sécurité d'exécution du programme identifié ; et
l'acquisition (S1107, S1204) du résultat de vérification stocké en association avec l'identificateur d'application du programme identifié dans l'unité de gestion d'application vérifiée, pour déterminer (S1110, S1206) qu'une vérification quant à si le programme identifié est soumis à une attaque ne doit pas être effectuée lorsque le résultat de la vérification précédente du résultat de vérification associé à l'appelant identifié représente que le programme identifié n'a pas été précédemment soumis à une attaque ou que le programme identifié a été précédemment soumis à une attaque.

11. Programme pour amener un ordinateur à exécuter le procédé de traitement d'informations selon la revendication 10.

12. Support d'enregistrement lisible par ordinateur dans lequel est stocké le programme selon la revendication 11.

13. Circuit intégré pour exécuter un ou plusieurs programmes ayant chacun un identificateur d'application qui est un identificateur unique, le circuit intégré comprenant un dispositif de traitement d'informations selon la revendication 1.
